# EUROPEAN PATENT APPLICATION

(11) **EP 3 904 239 A1**
(43) Date of publication of application: **03.11.2021**
(21) Application number: 19903425.7
(22) Date of filing: 24.12.2019
(51) Int. Cl.: B65G 1/137, G07G 1/01, G06Q 30/06

(54) **CIGARETTE PRODUCT MANAGEMENT SYSTEM AND CIGARETTE PRODUCT MANAGEMENT METHOD**

(30) Priority: 28.12.2018 JP 2018247958
(71) Applicant: Japan Tobacco Inc., Tokyo 105-6927 (JP)
(72) Inventor: OJIMA, Atsushi, Tokyo 105-8422 (JP)
(74) Representative: Hoffmann Eitle
(86) International application number: PCT/JP2019/050614
(87) International publication number: WO 2020/138087

(57) **Abstract**

A tobacco product management system includes: a means configured to, on the basis of information obtained from a customer, acquire a registered brand identifier for identifying a registered brand of the customer stored in a customer brand storage unit; a means configured to cause a display unit of an order terminal to display a brand designation display that makes it possible to perform a designating operation for a tobacco product of the registered brand identified using the acquired registered brand identifier; a means to identify a brand identifier of a tobacco product of a brand differing from the registered brand and designated in the designating operation performed to the order terminal by the customer; and a means configured to perform update processing for replacing, with the identified brand identifier, the registered brand identifier of the customer stored in the customer brand storage unit.

## Description

### TECHNICAL FIELD

The present invention relates to a technique of managing a tobacco product.

### BACKGROUND ART

In convenience stores and other stores, tobacco products of various brands are displayed according to brand in a so-called tobacco fixture. At the time of purchase of a tobacco product, a salesperson picks up a tobacco product of a brand designated by a customer from the tobacco fixture, for example. Typically, tobacco products are delivered in the form of carton to store and sold in units of carton or pack of cigarettes by unwrapping a carton.

PTL 1 below describes a product dispensing device that automatically dispenses a tobacco product of a desired brand. The product dispensing device includes an operation panel. By operating a brand selection switch and a quantity input switch on the operation panel, the desired quantity of tobacco products of a desired brand is automatically dispensed.

In this manner, at the time of purchase of a tobacco product, a customer or a salesperson may operate an order terminal (operation panel) to designate a tobacco product of a desired brand. Such an order terminal may also be used in, for example, a device that indicates the display position of a tobacco product of a designated brand but does not have a function of automatically dispensing a tobacco product.

### Citation List

### Patent Literature

PTL 1: Japanese Unexamined Patent Application Publication No. 2011-207575

### SUMMARY OF INVENTION

### TECHNICAL PROBLEM

However, a store handles a large number of brands of tobacco products. Thus, a customer may expend a lot of time and efforts finding a tobacco product of a desired brand from among a number of brands while operating the order terminal.

Typically, at convenience stores or other stores, the order terminal for a tobacco product is disposed on or near the register counter, and is operated at the time of purchasing the product. Thus, if it takes more time to operate this order terminal, the customer expends more time to make payment, which results in a long line of customers in front of the register counter.

The present invention has been made in view of the circumstances described above, and provides a technique that enables a customer to easily designate a tobacco product of a brand desired by the customer in a case of accepting the order for a tobacco product using an order terminal disposed at a store.

A "tobacco product" in this description does not mean each and every cigarette for smoking, but means a tobacco product pack or a tobacco product carton, which is a unit of purchase. The pack is obtained by wrapping a plurality of (for example, 20 pieces of) cigarettes or other tobaccos, and the carton is obtained by collectively wrapping a plurality of (for example, 10 pieces of) packs of tobacco products of the same type. The other tobaccos include a snuff and a pipe tobacco, and also include a cartridge or other related items used for a tobacco called an electronic cigarette, a heated tobacco product, or the like.

If a pack and a carton need to be distinguished separately from each other in this description, a tobacco product of a pack is referred to as "pack product", and a tobacco product of a carton is referred to as "carton product."

### SOLUTION TO PROBLEM

According to the present invention, there is provided a tobacco product management system including an order terminal capable of displaying brand information on tobacco products of a plurality of brands and capable of receiving a designating operation for a brand that a customer wishes to order from among the plurality of brands and a supporting device that supports removal of a tobacco product of the brand designated in the designating operation received by the order terminal, the tobacco product management system comprising: a brand acquisition means configured to, on the basis of information obtained from a customer, acquire a registered brand identifier for identifying a registered brand of the customer stored in a customer brand storage unit; a display processing means configured to cause a display unit of the order terminal to display a brand designation display that makes it possible to perform a designating operation for a tobacco product of the registered brand identified using the acquired registered brand identifier; a brand identification means configured to identify a brand identifier of a tobacco product of a brand differing from the registered brand and designated in the designating operation performed to the order terminal by the customer; and an update processing means configured to perform update processing for replacing, with the identified brand identifier, the registered brand identifier of the customer stored in the customer brand storage unit.

In addition, according to another aspect of the present invention, there is provided a tobacco product management method to be executed by a system including an order terminal capable of displaying brand information on tobacco products of a plurality of brands and capable of receiving a designating operation for a brand that a customer wishes to order from among the plurality of brands and a supporting device that supports removal of a tobacco product of the brand designated in the designating operation received by the order terminal, the tobacco product management method including the steps of: on the basis of information obtained from a customer, acquiring a registered brand identifier for identifying a registered brand of the customer stored in a customer brand storage unit; causing a display unit of the order terminal to display a brand designation display that makes it possible to perform a designating operation for a tobacco product of the registered brand identified using the acquired registered brand identifier; identifying a brand identifier of a tobacco product of a brand differing from the registered brand and designated in the designating operation performed to the order terminal by the customer; and performing update processing for replacing, with the identified brand identifier, the registered brand identifier of the customer stored in the customer brand storage unit.

Furthermore, as yet another aspect, the present invention can also provide a program that causes one or more computers to execute the tobacco product management method described above or a recording medium in which such a program is recorded and that one or more computers can read.

### EFFECT OF THE INVENTION

According to the present invention, it is possible to provide a technique that enables a customer to easily designate a tobacco product of a brand desired by the customer in a case where an order for a tobacco product is accepted using an order terminal disposed at a store

### BRIEF DESCRIPTION OF THE DRAWINGS

Fig. 1 is a schematic view illustrating a configuration of a tobacco product management system according to the present exemplary embodiment;
Fig. 2 is a diagram illustrating an example of layout of the tobacco product management system according to the present exemplary embodiment;
Fig. 3 is a perspective view illustrating a pack fixture;
Fig. 4 is a perspective view illustrating a magazine included in the pack fixture;
Fig. 5 is a schematic view illustrating hardware configurations of a supporting PC and an order terminal;
Fig. 6 is a block diagram illustrating an example of a processing configuration of the supporting PC, the order terminal, a first control unit, and a second control unit;
Fig. 7 is a diagram illustrating an example of a removal reporting display;
Fig. 8A is a diagram illustrating an example of a brand master table, and Fig. 8B is a diagram illustrating an example of a by-store brand information table;
Fig. 9 is a diagram illustrating an example of a brand selection screen;
Fig. 10 is a diagram illustrating an example of a brand ordering screen;
Fig. 11 is a diagram illustrating an example of a collective brand order screen; and
Fig. 12 is a sequence chart illustrating an example of operation of the tobacco product management system according to the present exemplary embodiment.

### DESCRIPTION OF EMBODIMENTS

Below, exemplary embodiment according to the present invention will be described with reference to the drawings. Note that the exemplary embodiment described below is merely given as an example. The present invention is not limited to the configurations of the exemplary embodiment described below.

### [Overview]

Before detailed description of a tobacco product management system according to the present exemplary embodiment (hereinafter, also referred to as a subject system), the outline of features of the subject system will be described.

The subject system mainly includes an order terminal and a supporting device.

This exemplary embodiment gives an example in which tobacco products in a form of both a pack product and a carton product are treated. However, only a tobacco product in a form of a pack product may be treated or only a tobacco product in a form of a carton product may be treated.

The order terminal is configured so as to be able to display brand information on tobacco products of a plurality of brands and also be able to receive a designating operation for a brand that a customer wishes to order from among the plurality of brands.

The order terminal is a so-called computer that a customer or a salesperson can operate. The order terminal may be a stationary computer such as an order terminal 20 that will be described later, or may be a portable computer such as a tablet, or a wearable computer.

Here, there is no particular limitation as to details of the "designating operation for a brand that a customer wishes to order" that the order terminal can accept, as long as the operation is an operation that makes it possible to designate a brand of a tobacco product that the customer wishes to order. This designating operation includes, for example: an operation of designating a brand that a customer wishes to order, this operation being performed to a touch screen of the order terminal by the customer or a salesperson; an operation by a customer or a salesperson of hovering, over a barcode reader of the order terminal, a tobacco product of a brand that the customer wishes to order; an operation of reading aloud a brand name that the customer wishes to order, this operation being performed by a customer or a salesperson to a microphone of the order terminal; and the like. In addition, the designating operation may be an operation in which information on a brand that a customer wishes to order is registered in a smartphone or other terminals that the customer carries, and the mobile terminal is hovered over an antenna of near-field communication of the order terminal.

In this specification, the "brand" of a tobacco product represents information by which a type of each tobacco product can be identified, and is denoted as a product name of the tobacco product. Specifically, the brand name of a tobacco product is the name of a brand group alone, or is a name of the brand group with indication of a tar amount or a package form or the like. The name of the brand group includes, for example, a representative name of the brand such as "MEVIUS (registered trademark)" or" SEVEN STARS (registered trademark)." On the assumption that the name of the brand group is set as "Tobacco A" for the purpose of convenience, each brand of a tobacco product has a brand name such as "Tobacco A," "Tobacco A-Box," "Tobacco A-10 mg," "Tobacco A-100's Box," "Tobacco A-Light," "Tobacco A-7 mg," or "Tobacco A-Light Box."

The supporting device is communicably connected to the order terminal, and supports removal or dispensing of a tobacco product of a brand designated in a designating operation received by the order terminal. The communication form between the supporting device and the order terminal may be any of wired communication and wireless communication, and a specific communication form is not limited.

The supporting device is an information processing device including at least one or more processors (information processing circuit (unit)) such as a central processing unit (CPU), a micro controller unit (MCU), a micro processing unit (MPU), or a digital signal processor (DSP). The supporting device may be one or more so-called general-purpose computers, or may be a dedicated computer (embedded microcontroller) configured by one or more printed boards called an embedded system or the like, or may be a combination thereof.

The supporting device can correspond to only a supporting PC 10, which will be described later, or can also correspond to the supporting PC 10 and either one of or both of a first control unit 30 and a second control unit 40, which will be described later. That is, the supporting device is not limited to a single device.

The target that the supporting device supports in removing a tobacco product may be the product dispensing device described above or other devices having a function of automatically dispensing a tobacco product, or may be a tobacco fixture that does not have an automatic dispensing function and displays so that an operator can manually remove a tobacco product, or may be a combination thereof.

In a case of supporting the former device, the supporting device can support the device, for example, by transmitting, to the device, a dispensing instruction including an identifier of a brand of a tobacco product to be dispensed. In a case of supporting the latter tobacco fixture, the supporting device can support it, for example, by providing a salesperson with a location where the tobacco product of a brand to be dispensed is stored in the tobacco fixture. In this exemplary embodiment, a projection image by a projector 56 is used to indicate the location of a magazine 513 in a pack fixture 50, and a carton-position reporting LED 62 is used to indicate a storage region in a carton fixture 60, thereby providing a salesperson with the removal location or the restock location of a tobacco product of the target brand. In addition, this support can be performed by causing a display device to display an image of a front appearance of the tobacco fixture to indicate the storage location of a tobacco product of the target brand. There is no limitation as to specific details of the support made by the supporting device, provided that removal of a tobacco product of a brand designated in the designating operation performed to the order terminal is supported in any manner.

The subject system includes at least a brand acquisition means, a display processing means, a brand identification means, and an update processing means. These means are each achieved by causing one or more processors to execute a computer program stored in a memory of either one of or both of the order terminal and the supporting device. In other words, these means may be each provided on the order terminal or may be provided on the supporting device or may be provided on both of them.

On the basis of information obtained from a customer, the brand acquisition means acquires a registered brand identifier for identifying a registered brand of the customer stored in a customer brand storage unit.

Here, the "registered brand" means a brand of a tobacco product identified on the basis of a brand identifier stored in the customer brand storage unit. A plurality of registered brand identifiers may be stored in the customer brand storage unit for a single customer.

The registered brand may also be called a mainly-smoked brand, depending on fields in which tobacco products are treated. Thus, in the following description, the registered brand may also be referred to as a mainly-smoked brand.

The "registered brand identifier" is an identifier by which a tobacco product of a registered brand of a customer can be identified. The registered brand identifier may be an identifier given uniquely in the subject system, or may be an identifier given outside of the subject system and including a Japan Article Number (JAN) code.

The "information obtained from a customer" may be information obtained from a living body of the customer, or may be information obtained from a mobile device or portable item of the customer. The mobile device of the customer corresponds to an electronic device having a certain communication function such as customer's mobile terminal, a device for a tobacco product called an electronic cigarette, a heated tobacco product, or an aerosol inhalator, or attachment items for the device, a radio frequency identifier (RFID) tag or the like. The customer's mobile terminal is a computer that the customer carries and has a communication function, and for example, is a mobile telephone device such as a smartphone, a table terminal, a notebook personal computer (PC), or the like. The portable item of a customer corresponds to an item that is not an electronic device. In this exemplary embodiment, the customer identifier obtained from the customer's mobile terminal through communication corresponds to the "information obtained from a customer."

It is only necessary that the information of "information obtained from a customer" itself is information used to acquire a registered brand identifier of a customer, and for example, includes a customer identifier by which a customer can be identified, or a barcode or a two-dimensional code obtained by encoding the customer identifier or the registered brand identifier, or the like.

The customer identifier is an identifier by which a customer can be identified in the subject system. The customer identifier may be an identifier given uniquely in the subject system or may be an identifier that can be used as a communication address such as an email address or information given to customer's mobile device or may be an identifier by which a customer can be identified in other services such as an account of a social network service (SNS) or may be an identifier by which a living body of a customer can be identified, which includes one obtained from biological information (vein, fingerprint, shape of a face, iris, or the like) on the customer. For example, if the subject system holds information on a correspondence between the customer identifier and the registered brand identifier, the brand acquisition means can acquire the registered brand identifier of the customer on the basis of the customer identifier.

The customer identifier can be acquired using an existing biometric recognition technique, for example, by capturing a living body of a customer, or can be acquired from a display screen of customer's mobile device that displays a barcode or a two-dimensional code or the like obtained by encoding the customer identifier or from a customer portable item to which the two-dimensional code or the like is given, or can be acquired from customer's mobile device through communication.

In addition, the brand acquisition means can acquire the registered brand identifier of a customer from information containing the registered brand identifier received through communication with a mobile device of the customer, or can acquire the registered brand identifier from a display screen of customer's mobile terminal that displays a barcode or a two-dimensional code or the like obtained by encoding the registered brand identifier.

As described above, there is no limitation as to the way in which the brand acquisition means acquires the registered brand identifier.

The "customer brand storage unit" may be provided in the order terminal or the supporting device or other server devices outside of the subject system, or may be provided in a mobile device of a customer.

The customer brand storage unit stores the registered brand identifier so as to be associated with whose registered brand it is. For example, as in this exemplary embodiment, the registered brand identifier may be stored so as to be associated with the customer identifier. Furthermore, in a case where the customer brand storage unit is included in a mobile device of a customer, the customer brand storage unit may store only the registered brand identifier.

The display processing means causes a display unit of the order terminal to display a brand designation display that makes it possible to perform a designating operation for a tobacco product of a registered brand identified using the registered brand identifier acquired by the brand acquisition means.

There is no limitation as to specific details of display of the "brand designation display" here, provided that the display enables a customer or a salesperson to operate to designate a tobacco product of a registered brand. Although no limitation is applied to the specific designating operation as described above, it is desirable that the brand designation display should include at least information on a tobacco product of a registered brand of a customer.

The brand identification means identifies a brand identifier of a tobacco product of a brand differing from the registered brand and designated in the designating operation performed to the order terminal by the customer.

The update processing means performs update processing for replacing the registered brand identifier of the customer stored in the customer brand storage unit, with the brand identifier identified by the brand identification means.

The update processing means may perform the update processing directly to the customer brand storage unit or may transmit the identified brand identifier to cause the other server device or customer's mobile device to perform updating.

As described above, in this exemplary embodiment, the registered brand identifier by which the registered brand of a customer is identified is stored in the customer brand storage unit, and the order terminal displays the brand designation display that makes it possible to perform a designating operation for a tobacco product of a registered brand identified using this registered brand identifier.

This enables a customer to easily designate a tobacco product of a desired brand (registered brand) in a case of ordering the tobacco product using the order terminal disposed at a store. Furthermore, on the store side, the supporting device supports removal of a tobacco product of a brand for which the order terminal receives an order. This makes it possible to increase the efficiency of removing work for a tobacco product performed by a salesperson and also possible to reduce wasted time in payment associated with the operation made to the order terminal by a customer who purchases the tobacco product.

In addition, in this exemplary embodiment, in a case where a customer performs the designating operation to the order terminal to order a tobacco product of a brand differing from the registered brand, the registered brand identifier stored in the customer brand storage unit is replaced with a brand identifier of the tobacco product.

This makes it possible to store registration brand information according to the latest customer's preference, which enables the tobacco product of this brand to be easily ordered on the basis of the latest brand information that the customer desires.

### [Tobacco Product Management System]

Below, the tobacco product management system (subject system) 1 according to the present exemplary embodiment having the features as described above will be described in detail.

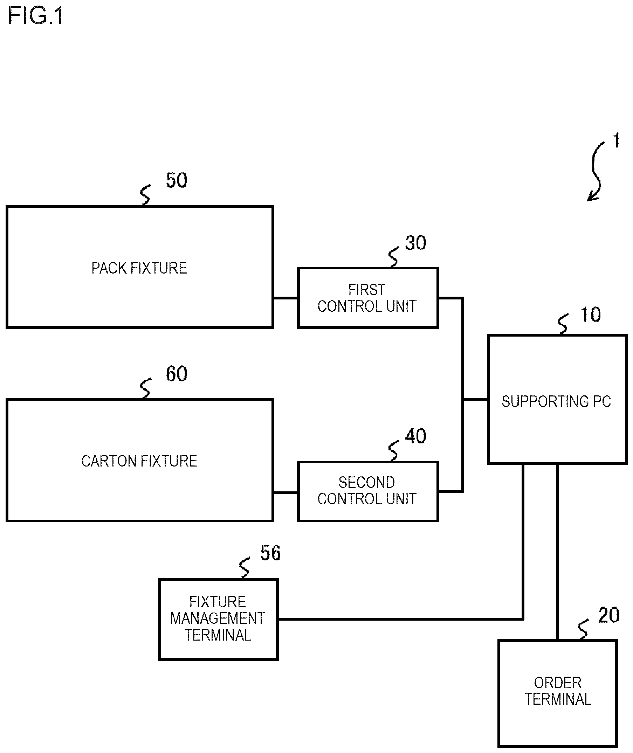

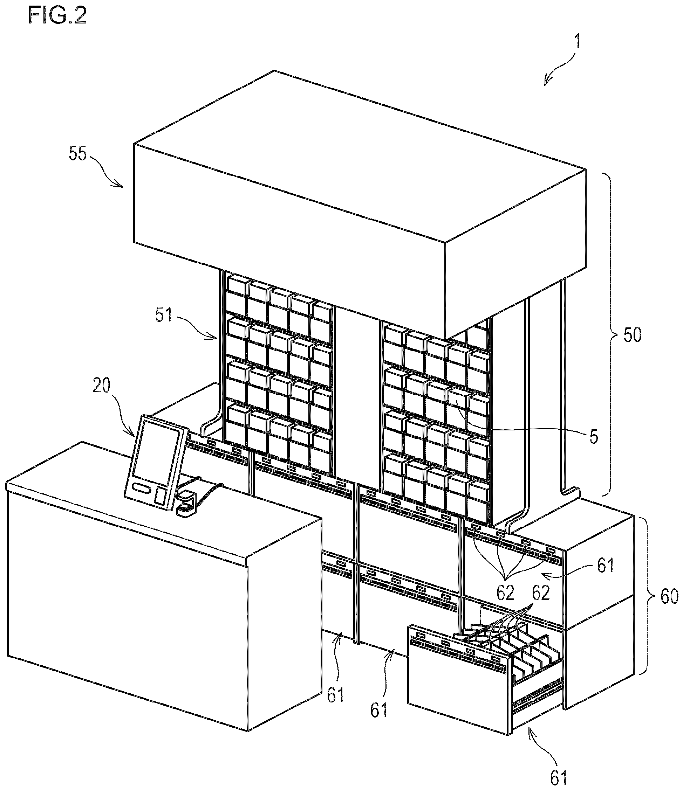

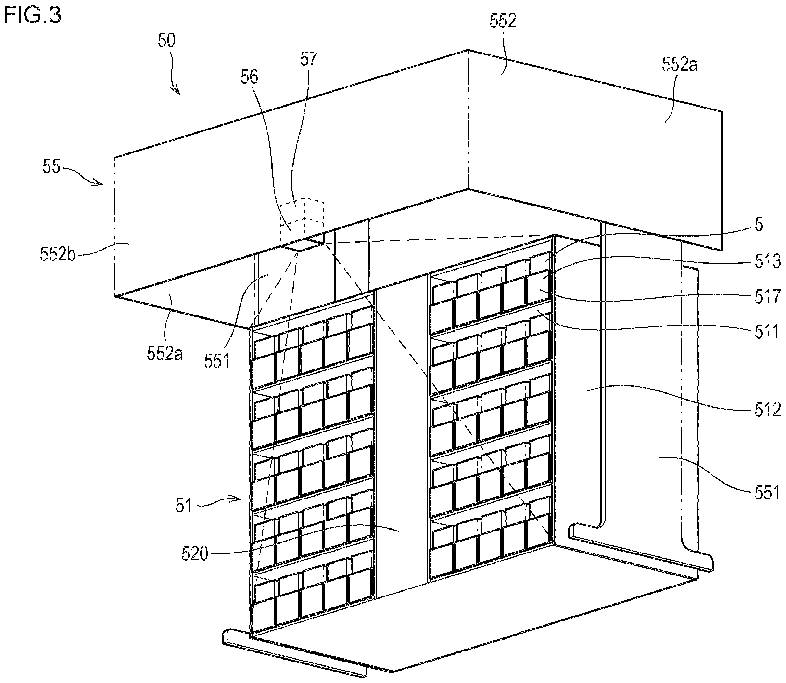

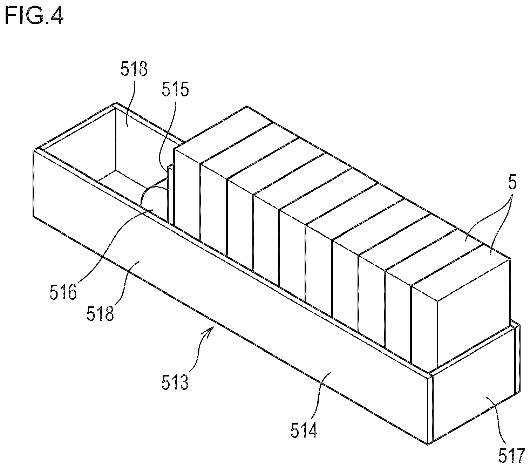

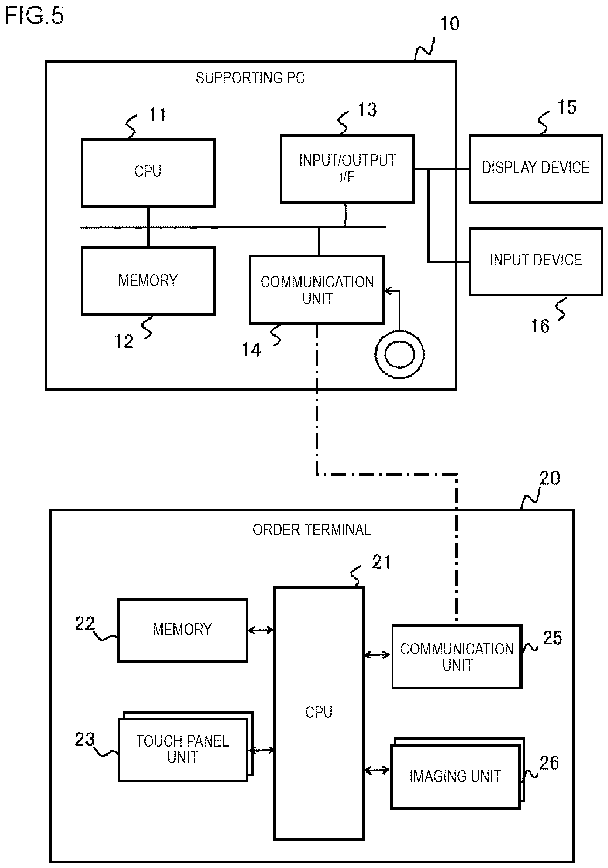

Fig. 1 is a schematic view illustrating the configuration of the tobacco product management system 1 according to the present exemplary embodiment. Fig. 2 is a diagram illustrating an example of layout of the tobacco product management system 1 according to the present exemplary embodiment. Fig. 3 is a perspective view illustrating a pack fixture 50. Fig. 4 is a perspective view illustrating a magazine 513 included in the pack fixture 50. Fig. 5 is a schematic view illustrating hardware configurations of the supporting PC 10 and the order terminal 20.

As illustrated in Fig. 2, the subject system 1 is disposed at a convenience store or other stores. Hereinafter, the store where the subject system 1 is disposed may be referred to as a subject store.

The subject system 1 includes the supporting personal computer (PC) 10, the order terminal 20, the first control unit 30, the second control unit 40, the pack fixture 50, the carton fixture 60, the fixture management terminal 70, and the like, as illustrated in Fig. 1.

The supporting PC 10 is a so-called computer, and includes a CPU 11, a memory 12, an input/output interface (I/F) 13, a communication unit 14, and the like as illustrated in Fig. 5. The CPU 11 is connected to each of other units through a bus or other communication lines.

In addition to a general CPU, the CPU 11 includes an MCU, an MPU, an application-specific integrated circuit (ASIC), a digital signal processor (DSP), a graphics processing unit (GPU), and the like.

The memory 12 includes a random access memory (RAM), a read only memory (ROM), and an auxiliary storage device (hard disk or the like).

The input/output I/F 13 can be connected to user interface units such as a display device 15 or an input device 16. The display device 15 is a device that displays a screen corresponding to rendering data processed by the CPU 11 or the like, such as a liquid crystal display (LCD) or a cathode ray tube (CRT) display. The input device 16 is a device that accepts input of a user operation, such as a keyboard or a mouse. The display device 15 and the input device 16 may be an integrated touch panel and may not be connected.

The communication unit 14 performs wired communication or wireless communication with another computer, or performs signal exchange with another device, or the like. In this exemplary embodiment, the communication unit 14 communicates with the first control unit 30, the second control unit 40, the order terminal 20, and a server device (not illustrated). There is no limitation as to the communication method performed by the communication unit 14. Note that a portable recording medium or the like may also be connected to the communication unit 14.

As illustrated in Fig. 2, the order terminal 20 is a stationary computer installed on a register counter in the subject store in a manner such that a customer and a salesperson can operate. However, the order terminal 20 may be installed at a location other than the register counter.

As illustrated in Fig. 5, the order terminal 20 includes a CPU 21, a memory 22, a touch panel unit 23, a communication unit 25, an imaging unit 26, and the like. The CPU 21 is connected to each of other units through a communication line such as a bus.

The touch panel unit 23 includes a display unit including a monitor and performing display processing, and also includes a touch sensor that senses an external contact or a proximity state. In this exemplary embodiment, two touch panel units 23 are provided with their faces being away from each other, one being provided to face customers, the other being provided to face salespersons. The same display is outputted on each display panel of the two touch panel units 23. This enables a salesperson to check a touch panel operation performed by a customer, and also enables a customer to check a touch panel operation performed by a salesperson. Furthermore, a customer and a salesperson can perform a series of tobacco product ordering operations in collaboration by using the touch panels.

The imaging unit 26 is a unit that captures images. In this exemplary embodiment, the imaging unit 26 includes a barcode scanner that can read a barcode, a two-dimensional barcode (QR code (registered trademark) or the like), or the like, and a vein imaging unit for vein recognition. The barcode scanner can read the barcode or QR code (registered trademark) that is attached to a package of a tobacco product or displayed on a mobile terminal of a customer. The vein imaging unit can capture a vein image from a human finger or palm. A specific imaging method performed by the imaging unit 26 is not limited.

The communication unit 25 performs wired communication or wireless communication with another computer, or performs signal exchange with another device, or the like. In this exemplary embodiment, the communication unit 25 performs near-field communication with a mobile terminal of a customer, and also performs wired communication or wireless communication with the order terminal 20. The communication method performed by the communication unit 25 is not limited.

Note that the CPU 21 and the memory 22 are similar to the CPU 11 and the memory 12 described above.

The hardware configurations illustrated in Fig. 5 are merely examples, and the hardware configurations of the supporting PC 10 and the order terminal 20 are not limited to the examples illustrated in Fig. 5. The supporting PC 10 and the order terminal 20 may include other hardware elements that are not illustrated, and the quantity of hardware elements are not limited to that in the example in Fig. 5. For example, the supporting PC 10 or the order terminal 20 may include a plurality of CPUs.

The first control unit 30 is a control board used to control the pack fixture 50, and the second control unit 40 is a control board used to control the carton fixture 60. Specifically, the first control unit 30 and the second control unit 40 are embedded systems each including a CPU, a memory, a communication unit, an input/output interface, and the like, and control the pack fixture 50 or the carton fixture 60 with a control program stored in the memory being executed by the CPU. Details of control of the pack fixture 50 performed by the first control unit 30 and details of control of the carton fixture 60 performed by the second control unit 40 will be described later.

The first control unit 30 is connected to constitutional elements of the pack fixture 50 through the communication unit or the input/output interface, and performs signal exchange with each of the constitutional elements. The second control unit 40 is connected to constitutional elements of the carton fixture 60 through the communication unit or the input/output interface, and performs signal exchange with each of the constitutional elements.

In addition, the first control unit 30 and the second control unit 40 are communicably connected to the supporting PC 10 through the communication units, and perform signal exchange with the supporting PC 10.

The fixture management terminal 70 is a so-called computer of a mobile type and has hardware configurations similar to those of the order terminal 20. Although illustration is not given in Fig. 2, the fixture management terminal 70 is installed around the pack fixture 50, such as at a side surface portion of the pack fixture 50.

The fixture management terminal 70 includes a touch panel. A fixture management menu that enables management of the pack fixture 50 or the carton fixture 60 is displayed on the touch panel. The fixture management terminal 70 is communicably connected to the supporting PC 10 through a communication unit, and transmits, to the supporting PC 10, information corresponding to details of operation on the fixture management menu.

In addition, a barcode scanner may be connected to the fixture management terminal 70. In this case, a barcode attached to a package of a pack product or a carton product to be restocked is read by the barcode scanner, and the information read is transmitted from the fixture management terminal 70 to the supporting PC 10.

In the example illustrated in Fig. 2, the pack fixture 50 and the carton fixture 60 are layered in the vertical direction, and are installed on the back surface (back counter side) of the register counter at the subject store. However, the pack fixture 50 may be installed on the back counter and the carton fixture 60 may be installed below the back counter. In addition, the positional relationship and the installation locations of the pack fixture 50 and the carton fixture 60 are not limited to those in the example in Fig. 2.

In the following description, for the purpose of facilitating understanding of the description, the single pack fixture 50 and the single carton fixture 60 are described. However, two pack fixtures 50 and two carton fixtures 60 may be provided. That is, two carton fixtures 60 may be disposed side by side, and two pack fixtures 50 may be disposed side by side, each of the pack fixtures 50 being disposed on the corresponding one of the carton fixtures 60. There is no limitation as to the quantities of pack fixtures 50 and carton fixtures 60 installed in the subject store.

The pack fixture 50 includes a magazine fixture 51 and a projection unit 55.

The magazine fixture 51 includes, for example, a magazine storage shelf 512 including a plurality of shelf boards 511, a plurality of magazines 513 mounted on the shelf board 511, a display screen 520 disposed at the center portion, in the lateral width direction, of the front surface portion of the magazine fixture 51.

The quantity of magazines 513 mounted in the magazine storage shelf 512 is not particularly limited. In a case of this exemplary embodiment, for example, the magazine storage shelf 512 includes the shelf boards 511 such that five shelf boards 511 are provided on each of left and right portions of the display screen 520. In addition, five magazines 513 are mounted on each of the shelf boards 511.

As illustrated in Fig. 4, the magazine 513 includes, for example: a mounting part 514 in which a plurality of pack products 5 are mounted so as to be aligned in one line in the front-rear direction; a slider 515 provided so as to be able to move in the front-rear direction along the mounting part 514; and an energizing unit 516 that energizes the slider 515 toward the front direction.

The mounting part 514 includes, for example, a front surface wall 517, a pair of left and right side walls 518, a bottom plate portion, and a rear surface wall. Note that the front surface wall 517 may be fixed to the side walls 518 and the front end portion of the bottom plate portion, or may be held with the front end portions of the pair of side walls 518 in a state of being able to tilt forward.

The slider 515 energizes, toward the front direction, the pack product 5 mounted on the mounting part 514. The slider 515 is configured to move more forward with decrease in the remaining quantity of pack product 5 in the mounting part 514.

The energizing unit 516 is mounted on the slider 515. For example, the energizing unit 516 may be a plate spring wound in a spiral shape, or may be a wire reel.

The projection unit 55 includes, for example, a pair of left and right strut parts 551, and a supporting unit 552 supported by these strut parts 551.

For example, one of the strut parts 551 is disposed along the left-side side wall portion of the magazine fixture 51, and the other one of the strut parts 551 is disposed along the right-side side wall portion of the magazine fixture 51. The supporting unit 552 includes, for example, a pair of left and right side wall portions 552a, and a front wall portion 552b that connects the front ends of these side wall portions 552a. The left and right side wall portions 552a are supported by the left and right strut parts 551, respectively. The front wall portion 552b is disposed more forward than the front surface of the magazine fixture 51, and is disposed higher than the magazine fixture 51.

The projection unit 55 further includes a projector 56, a camera 57, and the first control unit 30 (not illustrated in Fig. 3). For example, the projector 56 and the camera 57 are provided at the back surface side of the front wall portion 552b of the supporting unit 552, as illustrated in Fig. 3.

The projector 56 projects an image in a projection range containing the front surface walls 517 of the plurality of magazines 513 and the display screen 520, thereby performing displaying in this range. There is no particular limitation as to the quantity of light sources that the projector 56 has, and the quantity thereof may be one. However, it is preferable to provide a plurality of light sources.

In this exemplary embodiment, the projector 56 projects an image in the projection range described above to perform removal reporting display or restock reporting display on the front surface wall 517 of the magazine 513 or the display screen 520. For example, the removal reporting display provides an image in which the front surface wall 517 of a magazine 513 that stores a to-be-removed pack product 5 is set so as to have a specific color (for example, red) in the projection region and the other region is set in white, thereby indicating, to an operator (salesperson), the location of the magazine 513 that stores the to-be-removed pack product 5. The restock reporting display similarly performs displaying to the front surface wall 517 of the target magazine 513, thereby indicating, to the operator (salesperson), the location of the magazine 513 that needs a target pack product 5 to be restocked.

In this specification, the "restock" of a tobacco product includes stocking the tobacco product in the magazine 513 of the pack fixture 50 or in a storage region of the drawer shelf 61 of the carton fixture 60 in which the tobacco product was stored before, and also includes newly stocking a tobacco product which is newly dealt with, the tobacco product being newly stocked in the magazine 513 or in a storage region of the drawer shelf 61.

The camera 57 continuously captures images of the front surface walls 517 of the plurality of magazines 513, and outputs results of capturing to the first control unit 30. On the basis of the images transmitted from the camera 57 as described above, image recognition is performed in terms of the operation of removing the pack product 5 from the magazine 513 or the operation of restocking the pack product 5 into the magazine 513, although detailed description will be made later. For example, this makes it possible to detect a wrong removal operation of removing a pack product 5 that should not be removed, or a wrong restock operation of restocking a pack product 5 into another magazine 513 that is different from a magazine 513 into which the pack product 5 should be restocked.

The carton fixture 60 includes a cuboid-shaped frame body, and a plurality of drawer shelves 61 held in a frame body. In the example in Fig. 2, eight drawer shelves 61 are illustrated. However, the quantity of drawer shelves 61 included in the carton fixture 60 is not limited to the example illustrated in Fig. 2.

Each of the drawer shelves 61 includes a tray-shaped drawer main body having a bottom plate that supports a plurality of carton products, and a front wall portion provided at the front edge of the drawer main body and standing vertically. The drawer shelves 61 are each configured so that an operator can draws it from the frame body and also retracts it into the frame body. In a state where the drawer shelf 61 is stored in the frame body, the front wall portion thereof is substantially flush with the front end portion of the frame body and the front surface portion of the pack fixture 50.

In the drawer main body of each of the drawer shelves 61, a plurality of longitudinal partition units and a plurality of lateral partition units are provided. The plurality of longitudinal partition units extend in the front-rear direction and partition the inside of the drawer shelf 61 in the horizontal direction. The plurality of lateral partition units partition, in the front-rear direction, each of the inside regions partitioned by the longitudinal partition units. Thus, in this exemplary embodiment, the inside region of each of the drawer shelves 61 is partitioned into 4 regions in the horizontal direction and 9 regions in the front-rear direction, and 36 storage regions in total are formed. One carton product is stored in each of the storage regions. That is, in this exemplary embodiment, each of the drawer shelves 61 can store 36 carton products.

Furthermore, carton-position reporting LEDs 62 used to indicate the positions of the storage regions in each of the drawer shelves 61 are provided on an upper part of the front wall portion of each of the drawer shelves 61 and also on the longitudinal partition units of each of the drawer shelves 61.

A carton-position reporting LED 62 provided on the front wall portion indicates a drawer shelf 61 in which a storage region is formed and also indicates the position, in the horizontal direction, of the storage region in the drawer shelf 61 partitioned by the longitudinal partition units. A carton-position reporting LED 62 provided on a longitudinal partition unit in each of the drawer shelves 61 indicates the position, in the front-rear direction, of the storage region in the drawer shelf 61 partitioned by the lateral partition units.

That is, the carton-position reporting LED 62 provided on the front wall portion indicates the drawer shelf 61 and the position of the drawer shelf 61 in the horizontal direction, and the carton-position reporting LED 62 provided on the longitudinal partition unit indicates the position of the drawer shelf 61 in the front-rear direction. This enables an operator to quickly access a target storage region.

The carton-position reporting LEDs 62 are controlled to be turned on or off by the second control unit 40.

Furthermore, each of the drawer shelves 61 includes a detection sensor (not illustrated) that detects a carton product in a case where the carton product is stored in each of the storage regions. The detection sensor may be, for example, a weight sensor provided on the bottom plate of the drawer main body. However, the detection sensor may also be a sensor of another type such as an optical sensor or a capacitance sensor.

Furthermore, the carton fixture 60 includes lock mechanisms that enable each of the drawer shelves 61 to be selectively pulled out from the frame body. In a normal state, the lock mechanisms are in a locked state where all the drawer shelves 61 cannot be pulled out from the frame body. Under the control of the second control unit 40, only the designated drawer shelf 61 is selectively brought into an unlocked state so that the designated drawer shelf 61 can be pulled out from the frame body. Thus, it can be said that the drawer shelves 61 and the lock mechanisms thereof in this exemplary embodiment serve as a stocker access unit that enables at least part (a storage region) of the plurality of product stocker units to be brought into a state where an operator can access or a state where the operator cannot access.

With the drawer shelves 61 being provided with the lock mechanisms, it is possible to prevent unauthorized access to the storage regions for carton products.

### [Processing Configuration]

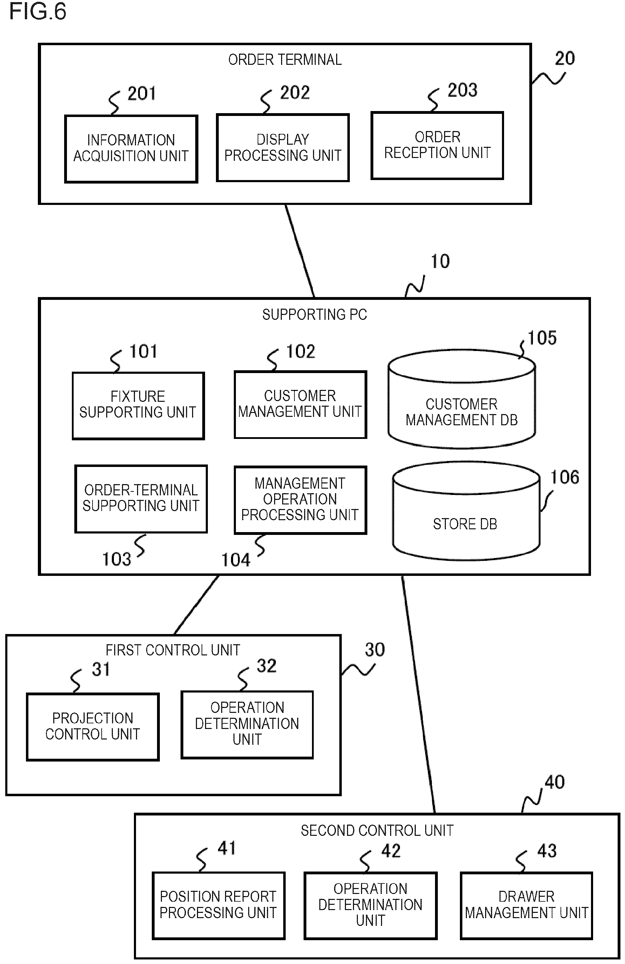

Next, description will be made of the processing configuration of the supporting PC 10, the order terminal 20, the first control unit 30, and the second control unit 40 with reference to Fig. 6. Fig. 6 is a block diagram illustrating an example of a processing configuration of the supporting PC 10, the order terminal 20, the first control unit 30, and the second control unit 40.

### [First Control Unit]

The first control unit 30 includes, for example, a projection control unit 31 and an operation determination unit 32. These are software elements and are achieved with a control program stored in a memory such as a RAM or ROM being executed by a CPU.

The projection control unit 31 controls projection of the projector 56 of the pack fixture 50 on the basis of a projection instruction transmitted from the supporting PC 10. The projection instruction includes a report designation concerning whether it is the removal reporting display or the restock reporting display or the collective removal reporting display. In a case where the report designation in the projection instruction indicates the removal reporting display, the projection instruction further includes the position information concerning the magazine 513 and the quantity of to-be-removed pack products 5. In a case where the report designation in the projection instruction indicates the restock reporting display, the projection instruction includes the position information concerning the magazine 513. In a case where the report designation in the projection instruction indicates the collective removal reporting display, the projection instruction further includes the position information concerning the magazine 513.

The projection control unit 31 holds the position information concerning each magazine 513 in the magazine fixture 51 and a correspondence relationship between the display screen 520 and the local region information in a projection image. On the basis of the position information concerning the magazine 513 included in the projection instruction, the projector 56 is caused to project a projection image in which a specific color (for example, red) is set in a local region corresponding to the position of the magazine 513 and another color (for example, white) is set in the other region. This makes it possible to indicate, to the operator (salesperson), the position of the magazine 513 serving as the target of removal or restock.

Furthermore, on the basis of the quantity of pack products 5 included in the projection instruction, the projection control unit 31 can cause the projector 56 to project a projection image containing a specific character string (for example, "Please remove one tobacco product from the location blinking red" or "Please restock tobacco products at the location blinking blue") in a local region corresponding to the position of the target magazine 513 or a local region corresponding to the display screen 520. The projection control unit 31 holds a predetermined character string for each report designation (removal reporting display and restock reporting display) in the projection instruction. This makes it possible to generate a specific character string as described above.

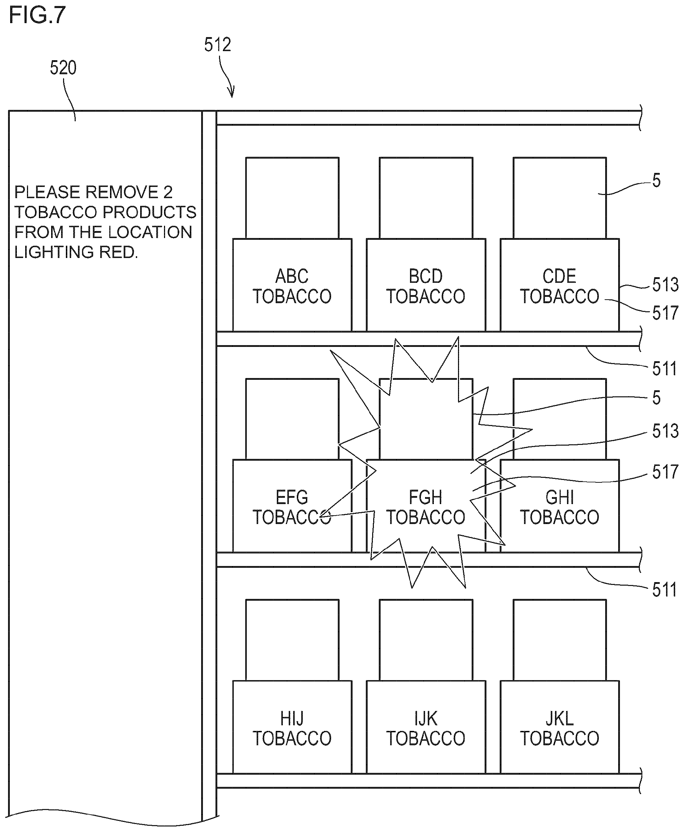

Fig. 7 is a diagram illustrating an example of the removal reporting display.

As illustrated in Fig. 7, in the removal reporting display, the location of the magazine 513 serving as the report target is displayed so as to be more conspicuous than display of locations of other magazines 513. For example, the location of the magazine 513 serving as the report target is displayed in red, and the locations of other magazines 513 are displayed in white. Furthermore, the location of the magazine 513 serving as the report target may be displayed in a blinking manner.

As described above, the removal reporting display enables the front surface wall 517 of the magazine 513 serving as the report target to be more conspicuous than the surroundings. This enables an operator (salesperson) to easily and quickly recognize the location of the magazine 513 at which the pack product 5 is removed, and rapidly remove the pack product 5 without error.

In addition, for example, a brand name of the pack product 5 stored in each of the magazines 513 may be displayed as a normal display on the front surface wall 517 of the magazine 513 as illustrated in Fig. 7. The information displayed as the normal display may include a brand name and may also include the price, the tar amount, the nicotine amount of each of the pack products 5, and the like. Such a normal display may be achieved with a projection image by the projector 56 or may be achieved with a paper surface on which the information is printed and that is disposed on the front surface wall 517. In a case where the normal display is achieved with the projection image, it is only necessary that the removal reporting display is displayed such that the surrounding area of the magazine 513 serving as the report target is set as the normal display and the position of the magazine 513 serving as the report target is set more conspicuously than the surrounding area.

Furthermore, in the example in Fig. 7, the specific character string "Please remove 2 tobacco products from the location lighting red" is displayed on the display screen 520 as the removal reporting display. As described above, this specific character string can be generated with a predetermined character string ("tobacco from the location lighting red" and "Please remove" in Fig. 7) corresponding to the report designation (removal reporting display in Fig. 7) contained in the projection instruction and also with a character string ("2" in Fig. 7) corresponding to the quantity of pack products 5 contained in the same projection instruction.

In a case where the report designation in the projection instruction indicates the collective removal reporting display, the projection control unit 31 causes the projector 56 to project, on the display screen 520, an image (for example, a specific character string "Please remove all the tobaccos from the location lighting red") that indicates the location of the magazine 513 serving as the target as described above and also encourages the collective removal.

The operation determination unit 32 receives an image captured by the camera 57 and applies image recognition processing to the captured image to detect a removal operation for a pack product 5 from the magazine 513 by an operator or a restock operation for a pack product 5 into the magazine 513. There is no specific limitation as to this image recognition processing, and it is only necessary that this processing employs an existing image recognition technique.

In addition, the operation determination unit 32 determines whether the detected removal operation is an operation of removing a pack product 5 from the magazine 513 at a location indicated by the position information included in the projection instruction described above. This determination makes it possible to determine whether the removal operation is normal or abnormal. Similarly, the operation determination unit 32 determines whether the detected restock operation is an operation of restocking a pack product 5 into a magazine 513 at a location indicated by the position information included in the projection instruction described above. This determination makes it possible to determine whether the restock operation is normal or abnormal.

For example, on the basis of the image, the operation determination unit 32 identifies the location of the magazine 513 serving as the target of the detected removal operation or the detected restock operation. On the basis of whether or not the identified location of the magazine 513 corresponds with the location indicated by the position information included in the projection instruction, it is possible to determine whether the removal operation or the restock operation is normal or abnormal.

In addition, by using image recognition, the operation determination unit 32 can further identify the quantity of pack products 5 removed in the removal operation. In this case, on the basis of whether the identified quantity of pack products 5 corresponds with the quantity included in the projection instruction, the operation determination unit 32 can determine whether the removal operation is normal or abnormal. Similarly, by using image recognition, the operation determination unit 32 can further identify the quantity of pack products 5 restocked in the restock operation.

However, instead of the image recognition by the operation determination unit 32, the first control unit 30 may use another method to acquire the quantity of pack products 5 that have actually been removed or the quantity of pack products 5 that have actually been restocked.

In this exemplary embodiment, each of the magazines 513 is configured so that the slider 515 moves forward with decrease in the remaining quantity of pack products 5. Thus, for example, each of the magazines 513 may include a means that detects the position of the slider 515 to detect the remaining quantity of pack products 5 in each of the magazines 513 on the basis of the detected position of the slider 515. The position of the slider 515 may be identified on the basis of the distance to the slider 515 detected by a distance measuring sensor provided in the rear portion of the magazine 513, or may be identified on the basis of the state of the energizing unit 516 that energizes the slider 515 toward the front direction, or may be identified using another method. In addition, in a case of using the distance measuring sensor, the remaining quantity of pack products in the magazine 513 can be detected on the basis of the distance to a pack product 5 disposed at the rearmost position (at the furthest end), rather than the position of the slider 515. Moreover, a weight sensor may be provided at the bottom plate portion of the mounting part 514 of each of the magazines 513 to detect the remaining quantity of pack products 5 on the basis of the weight measured with this weight sensor.

By using these methods, the first control unit 30 consecutively detects the remaining quantity of pack products 5 for each of the magazines 513, and a change in the amount (quantity) of the remaining quantity in the magazine 513 corresponding to the position information included in the projection instruction may be set as the quantity of pack products 5 that have been removed or restocked. There is no limitation as the method of acquiring the quantity of pack products 5 that have actually been removed and the quantity of pack products 5 that have actually been restocked. The quantity of pack products 5 that has been acquired as described above is transmitted from the first control unit 30 to the supporting PC 10.

Furthermore, the first control unit 30 can identify a magazine 513 to which the removal operation or the restock operation is performed, on the basis of the change (or directly on the basis of the change in positions, the change in distance, or the change in weight of the slider 515) in the remaining quantity of pack products in each of the magazines 513. As described above, it may be possible to detect the removal operation and the restock operation and determine whether each of the operations is normal or abnormal, without using the image recognition by the operation determination unit 32.

The first control unit 30 may instruct the projection control unit 31 to perform incorrect-operation reporting display that indicates that the removal operation or the restock operation is abnormal, in a case where the removal operation or the restock operation is determined to be abnormal. In this case, the projection control unit 31 causes the projector 56 to perform the incorrect-operation reporting display (for example, "Removal location is incorrect" or "Restock location is incorrect") in accordance with the instruction. Thus, such incorrect-operation reporting display is performed on the display screen 520.

On the other hand, in a case where the removal operation or the restock operation is determined to be normal, the first control unit 30 notifies the supporting PC 10 of removal completion or restock completion together with the quantity of pack products that has been removed or has been restocked.

### [Second Control Unit]

The second control unit 40 includes, for example, a position report processing unit 41, an operation determination unit 42, and a drawer management unit 43. These are software elements, and are achieved with a control program stored in a memory such as a RAM or a ROM being executed by a CPU.

Upon receiving a removal instruction or a restock instruction from the supporting PC 10, the position report processing unit 41 causes a corresponding carton-position reporting LED 62 provided in the carton fixture 60 to turn on on the basis of the instruction. Specifically, the removal instruction and the restock instruction include position information on a storage region in a drawer shelf 61 from which a carton product should be removed or into which a carton product should be restocked. The position report processing unit 41 causes a carton-position reporting LED 62 corresponding to this position information to turn on. The position report processing unit 41 holds information that associates the position of each storage region and a corresponding carton-position reporting LED 62 with each other. On the basis of this associating information, the position report processing unit 41 can identify the carton-position reporting LED 62 corresponding to the position information included in the removal instruction or the restock instruction.

The removal instruction for collective removal may include pieces of position information on a plurality of storage regions. In this case, it is only necessary that the position report processing unit 41 causes a plurality of carton-position reporting LEDs 62 corresponding to the plurality of pieces of position information to collectively turn on.

The operation determination unit 42 determines whether the removal operation by an operator for a carton product from a storage region of a drawer shelf 61 is normal or abnormal, or the restock operation for a carton product into the storage region is normal or abnormal.

In a case of receiving the removal instruction, after the reception, the operation determination unit 42 checks that a carton product is removed from the storage region serving as the target on the basis of sensing information from the detection sensor, thereby determining that the removal operation is normal. On the other hand, if it is checked that the carton product is removed from a storage region other than the storage region serving as the target, the operation determination unit 42 determines the removal operation to be abnormal.

Furthermore, in a case of receiving the restock instruction, after the reception, the operation determination unit 42 checks that a carton product is stored in the storage region serving as the target on the basis of the sensing information from the detection sensor, thereby determining the restock operation to be normal. If it is checked that the carton product is stored in a storage region other than the storage region serving as the target, the operation determination unit 42 determines the restock operation to be abnormal.

Upon determining that the removal operation or the restock operation is normal, the operation determination unit 42 notifies the supporting PC 10 of removal completion or restock completion. On the other hand, in a case where the operation determination unit 42 determines that the removal operation or the restock operation is abnormal, the operation determination unit 42 may cause a carton-position reporting LED 62 corresponding to the storage region from which the carton product is supposed to be removed or into which the carton product is supposed to be restocked, to blink, or may give a beep or other error outputs.

Incidentally, in a case of an instruction given to remove or restock a plurality of carton products, the removal instruction or the restock instruction may include position information on a plurality of storage regions. In this case, it is only necessary that the position report processing unit 41 causes a plurality of carton-position reporting LEDs 62 corresponding to the position information on the plurality of storage regions to turn on, and the operation determination unit 42 makes determination as to the removal of carton products from the plurality of storage regions or the restock operation.

The drawer management unit 43 controls the lock mechanism of the drawer shelf 61. Specifically, after the corresponding carton-position reporting LED 62 turns on, the drawer management unit 43 brings the lock mechanism of the corresponding drawer shelf 61 into an unlocked state, on the basis of the removal instruction or restock instruction transmitted from the supporting PC 10. Then, upon sensing that the drawer shelf 61 is completely retracted, the drawer management unit 43 brings the lock mechanism of the drawer shelf 61 into a locked state.

### [Supporting PC]

The supporting PC 10 includes, for example, a fixture supporting unit 101, a customer management unit 102, an order-terminal supporting unit 103, a management operation processing unit 104, a customer management database (DB) 105, and a store database (DB) 106. These are software elements, and are achieved with a control program stored in the memory 12 such as a RAM or ROM being executed by the CPU 11.

The customer management DB 105 stores customer's main smoke information or the like. The customer's main smoke information is information in which a customer ID and a mainly-smoked brand ID are associated with each other in terms of each customer (smoker). Thus, the customer management DB 105 may be called a customer brand storage unit.

The customer ID is an identifier by which a customer (smoker) can be identified. The customer ID may be an identifier given uniquely in the subject system 1, or may be an identifier that can be used as a communication address such as an email address or an ID given to a mobile terminal that the customer owns, or may be an identifier by which the customer can be identified in other services such as an account of a social network service (SNS), provided that the customer ID is information unique to each customer in the subject system 1.

The mainly-smoked brand ID is a brand ID of customer's mainly-smoked brand.

The brand ID is an identifier by which a brand of a tobacco product can be identified. In this exemplary embodiment, only by using the brand ID, it is not possible to distinguish between a pack product and a carton product of the same brand.

Some smokers change tobacco products of a plurality of brands. Thus, there is a possibility that one customer ID is associated with a plurality of mainly-smoked brand IDs.

The store DB 106 stores, for example, brand master information, by-store brand information, fixture setting information, and a fixture event log.

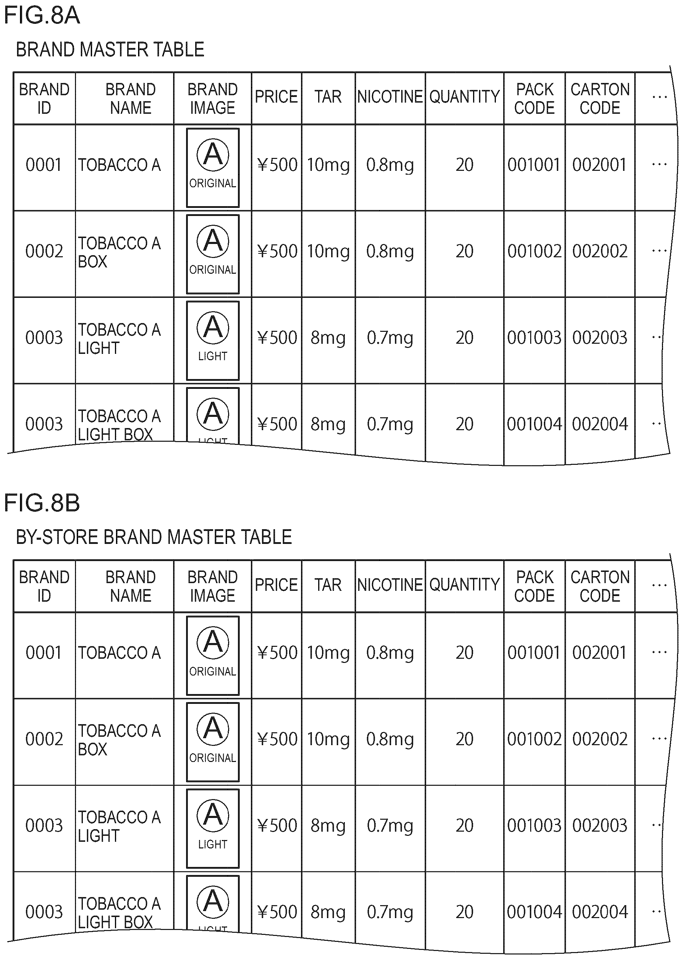

Fig. 8A is a diagram illustrating an example of a brand master table. Fig. 8B is a diagram illustrating an example of a by-store brand information table. In this exemplary embodiment, the brand master information is stored in the brand master table, and the by-store brand information is stored in the by-store brand information table.

As illustrated in Fig 8A, the brand master table is a master table that stores, by brand, brand information such as a brand ID, a brand name, a brand image, a price, the tar amount, the nicotine amount, the quantity of pack products, a pack code, or a carton code. In this exemplary embodiment, the brand master table stores brand information on all the brands for which information can be obtained from tobacco manufacturers. In other words, the brand master table stores information on newly introduced brands that the subject store has not yet dealt with, rare brands, and discontinued brands that the subject store previously dealt with but does not currently deal with. However, the brand master table may not store information on the discontinued brands. In addition, the brand master table may store other brand information such as smoking taste that is not given as an example in Fig. 8A.

The pack code is a JAN code attached on a package of a pack product of the corresponding brand. The carton code is a JAN code attached on a package of a carton product of the corresponding brand.

The supporting PC 10 obtains the latest brand information from external server devices, and reflects it in the brand master table.

As illustrated in Fig. 8B, the by-store brand information table is a table that stores brand information on items (fields) similar to those in the brand master table. However, the by-store brand information table differs from the brand master table in that only the brand information on brands that the subject store currently deals with is stored.

The fixture setting information includes pack-fixture management information, carton-fixture management information, and renewal-or-discontinuation reservation information.

The pack-fixture management information stores magazine information in which a brand ID, position information on a magazine 513, and the remaining quantity are associated with each other, the quantity of pieces of the magazine information being equal to the total quantity of magazines 513 provided within the pack fixture 50.

The position information on the magazine 513 is information used to identify the position of each of the magazines 513 in an image projected by the projector 56 as described above. Thus, the position information on the magazine 513 may be, for example, a location identifier formed by the number of magazine storage shelf 512, the number of shelf board 511, and the position number (for example, the position from the right or the left) on the shelf board 511. In addition, the position information on a magazine 513 may be a magazine identifier by which each of the magazines 513 can be identified, provided that this enables the projection control unit 31 of the first control unit 30 to identify a local region corresponding to the position of each of the magazines 513 in a projection image.

In the pack-fixture management information, a brand ID of a brand of a tobacco product stored in the magazine 513 identified using the position information on the magazine 513 and the remaining quantity of the tobacco products are associated with each other.

The carton-fixture management information is information that relates to all the storage regions formed within the carton fixture 60 and in which the position information on each of the storage regions, the brand ID indicating a brand of a carton product stored in the storage region, and the state (existence or absence) of storage of the carton product are associated with each other. The position information on each of the storage regions included in the carton-fixture management information is formed by, for example, the number of a drawer shelf 61, the line number in the horizontal direction within the drawer shelf 61, and a partition number in the front-rear direction within the drawer shelf 61. However, the position information on each of the storage regions may be a storage region identifier by which each of the storage regions can be identified, provided that the identifier enables the position report processing unit 41 of the second control unit 40 to identify a carton-position reporting LED 62 corresponding to each of the storage regions.

The renewal-or-discontinuation reservation information is information set such that, on a menu displayed on the fixture management terminal 70, an operator designates a brand (referred to as a renewed-or-discontinued brand) that is currently dealt with but will be stopped dealing with in the future. It can also be said that this information is information for designating in advance the renewed-or-discontinued brand that is to be replaced in the future. The renewal-or-discontinuation reservation information includes a brand ID for this renewed-or-discontinued brand.

The fixture event log includes information such as event occurrence date and time (simply referred to as date and time), a fixture ID for identifying the fixture where the event has occurred, an event ID for identifying event details, a brand ID, and the quantity, the information being set for each event that has occurred in the pack fixture 50 or the carton fixture 60.

The fixture ID includes an ID indicating the pack fixture 50 and an ID indicating the carton fixture 60.

The event ID includes, for example, an ID indicating that a pack product or a carton product has been removed, an ID indicating that a pack product or a carton product has been restocked, an ID indicating that a carton product has been removed to restock a pack product of the same brand.

The brand ID and the quantity indicate a brand that has been dealt with at the corresponding event and the quantity thereof.

Such a fixture event log is updated by the fixture supporting unit 101 that will be described later.

The fixture supporting unit 101 communicates with the first control unit 30 and the second control unit 40 to support and manage operations of the pack fixture 50 and the carton fixture 60.

In a case of acquiring the ordered brand information from the order terminal 20, the fixture supporting unit 101 transmits an instruction concerning the ordered brand to the first control unit 30 or the second control unit 40, on the basis of the acquired ordered brand information. Specifically, the fixture supporting unit 101 identifies whether the order unit is either one of or both of a pack product and a carton product, on the basis of an order unit ID included in the ordered brand information. In a case where the order unit includes the pack product, the fixture supporting unit 101 transmits a projection instruction to the first control unit 30. At this time, on the basis of the brand ID for the ordered brand included in the ordered brand information, the fixture supporting unit 101 extracts position information on a magazine 513 corresponding to the brand ID from the pack-fixture management information included in the fixture setting information on the store DB 106 described above, and includes, in the projection instruction, this position information and the quantity included in the ordered brand information.

On the other hand, in a case where the order unit includes the carton product, the fixture supporting unit 101 transmits a removal instruction to the second control unit 40. At this time, on the basis of the brand ID of the ordered brand included in the ordered brand information, the fixture supporting unit 101 extracts the position information on a storage region corresponding to this brand ID, from the carton-fixture management information included in the fixture setting information on the store DB 106 described above, and includes, in the removal instruction, this position information and the quantity included in the ordered brand information.

After this, upon receiving notification of removal completion from the first control unit 30, the fixture supporting unit 101 adds a record concerning removal of a pack product to the fixture event log in the store DB 106. The date and time, the fixture ID (pack fixture 50), the event ID (remove), the brand ID (brand ID of the ordered brand), and the quantity (quantity of ordered brands) are set in this record.

Similarly, upon receiving notification of removal completion from the second control unit 40 (operation determination unit 42), the fixture supporting unit 101 adds a record concerning removal of a carton product to the fixture event log in the store DB 106. The date and time, the fixture ID (carton fixture 60), the event ID (remove), the brand ID (brand ID of the ordered brand), the quantity (quantity of ordered brands) are set in this record.

On the other hand, in a case of acquiring the ordered brand information from the order terminal 20 when the lock mechanism of at least one drawer shelf 61 in the carton fixture 60 is in the unlocked state, the fixture supporting unit 101 suspends transmission of a removal instruction associated with this ordered brand information until this lock mechanism is brought into the locked state. The fixture supporting unit 101 can acquire the state of the lock mechanism of the drawer shelf 61 from the drawer management unit 43 of the second control unit 40.

In addition, it may be possible that the fixture supporting unit 101 suspends transmission of the removal instruction, and the management operation processing unit 104, which will be described later, causes the fixture management terminal 70 to output display for indicating that an order has come. This enables an operator (salesperson) who performs a restock operation toward the carton fixture 60 to immediately know that the order has come.

In a case where the restock request operation is performed on the fixture management terminal 70, the fixture supporting unit 101 determines whether the replenishment brand serving as the target of the restock request operation is assigned to a magazine 59 of the pack fixture 50 or a storage region of the carton fixture 60, and then, transmits an instruction concerning the replenishment brand to the first control unit 30 or the second control unit 40. The replenishment brand means a brand of a tobacco to be restocked.

Here, the restock request operation is performed using the fixture management terminal 70 in a case where a tobacco product is restocked and in a case where a tobacco product is newly stocked. In a case of restocking a tobacco product, a tobacco product of a brand to be restocked has already been stored in the pack fixture 50 or the carton fixture 60. Thus, the by-store brand information table in the store DB 106 stores brand information on the replenishment brand. On the other hand, in a case of newly stocking a tobacco product, a tobacco product of a brand to be restocked has not yet been stored in the pack fixture 50 or the carton fixture 60. Thus, brand information on this replenishment brand is not yet stored in the by-store brand information table.

Thus, on the basis of a brand ID, a pack code, or a carton code concerning the replenishment brand, the fixture supporting unit 101 can look up the by-store brand information table in the store DB 106 to determine whether or not the replenishment brand is assigned to a magazine 59 in the pack fixture 50 or a storage region in the carton fixture 60.

Moreover, in this exemplary embodiment, on the basis of whether a record having a brand ID for the replenishment brand set therein exists in the pack-fixture management information and the carton-fixture management information in the fixture setting information stored in the store DB 106, it is possible to determine whether or not the replenishment brand is assigned to a magazine 59 in the pack fixture 50 or a storage region in the carton fixture 60.

In the following description, any of these determinations may be referred to as determination as to whether or not a brand has been assigned to a magazine 59 or a storage region.

Here, there are generally three types of restock request operation in a case of restocking a tobacco product.

The first one is a restock request operation in which an operator (salesperson) selects a restock target brand from among a brand list of tobacco products stored in the pack fixture 50 or the carton fixture 60. Displaying of the brand list and selecting from the brand list is performed with the fixture management terminal 70. Hereinafter, this operation is referred to as a first restock request operation.

The second one is a restock request operation to designate a restock target brand by an operator causing a barcode scanner coupled to the fixture management terminal 70 to read a JAN code of a pack product serving as the restock target. In this case, a menu" Scan a pack product to restock it" is selected from a menu displayed on the fixture management terminal 70. Hereinafter, this operation is referred to as a second restock request operation.

The third one is a restock request operation to designate a restock target brand by an operator causing a barcode scanner coupled to the fixture management terminal 70 to read a JAN code of a carton product serving as the restock target. In this case, a menu" Scan a carton product to restock it" is selected from a menu displayed on the fixture management terminal 70. Hereinafter, this operation is referred to as a third restock request operation.

The fixture supporting unit 101 acquires, from the fixture management terminal 70, an operation ID by which such first, second, and third restock request operations can be identified, to perform the following restock processing on the basis of the operation ID.

In a case of acquiring, from the fixture management terminal 70, an operation ID indicating the second restock request operation and a JAN code of a pack product, the fixture supporting unit 101 identifies brand information that stores the JAN code as a pack code, from the by-store brand information table in the store DB 106. In addition, on the basis of the brand ID of the identified brand information, the fixture supporting unit 101 extracts position information concerning a magazine 513 in the pack fixture 50 and associated with the brand ID from the pack-fixture management information in the fixture setting information in the store DB 106. Then, the fixture supporting unit 101 transmits, to the first control unit 30, a projection instruction including the extracted position information and a report designation for the restock reporting display. Thus, the projector 56 is controlled in the pack fixture 50 to output the restock reporting display that indicates a position of the magazine 513 to which the brand ID of the replenishment brand is assigned.

After this, upon receiving notification of restock completion from the first control unit 30, the fixture supporting unit 101 uses the quantity included in the notification to update the remaining quantity in the magazine 513 serving as the target in the pack-fixture management information in the fixture setting information in the store DB 106. In addition, the fixture supporting unit 101 adds a record concerning the restock of a pack product to the fixture event log in the store DB 106. The date and time, the fixture ID (pack fixture 50), the event ID (restock), the brand ID (brand ID of the replenishment brand), the quantity (quantity of restocks) are set in this record.

In a case of acquiring, from the fixture management terminal 70, the operation ID indicating the third restock request operation and a JAN code of the carton product, the fixture supporting unit 101 identifies the brand information that stores the JAN code as a carton code, from the by-store brand information table in the store DB 106. The fixture supporting unit 101 transmits a restock instruction including the brand ID for the brand information to the second control unit 40. With this operation, in the carton fixture 60, the carton-position reporting LED 62 that indicates the position of the storage region to which the brand ID for the replenishment brand is assigned, is turned on, and the lock mechanism of a drawer shelf 61 having this storage region is brought into the unlocked state, which enables a carton product to be restocked into this storage region.

After this, upon receiving notification of restock completion from the second control unit 40, the fixture supporting unit 101 sets the brand ID of the replenishment brand in a record of the storage region serving as the target in the carton-fixture management information in the fixture setting information in the store DB 106, and also sets the storage state "exist." In addition, the fixture supporting unit 101 adds a record concerning a restock of a carton product to the fixture event log in the store DB 106. The date and time, the fixture ID (carton fixture 60), the event ID (restock), the brand ID (brand ID of the replenishment brand), the quantity (quantity of restocks = 1) are set in this record.

In a case of receiving, from the fixture management terminal 70, the operation ID indicating the first restock request operation and the brand ID of a replenishment brand, the fixture supporting unit 101 first transmits a removal instruction including the brand ID of the replenishment brand to the second control unit 40. With this operation, in the carton fixture 60, the carton-position reporting LED 62 that indicates the position of the storage region that stores the carton product of the replenishment brand is turned on, and the lock mechanism of a drawer shelf 61 that holds this storage region is brought into the unlocked state.

This enables an operator (salesperson) to remove the carton product of the replenishment brand from the storage region of this drawer shelf 61. Once the detection sensor of the drawer shelf 61 detects that the carton product is removed, removal completion is received from the second control unit 40, and the fixture supporting unit 101 can give the fixture management terminal 70 an instruction to activate the barcode scanner.

Furthermore, at this time, in association with the reception of the removal completion, the fixture supporting unit 101 sets a storage state "absent" in a record of the storage region serving as the target in the carton-fixture management information in the fixture setting information in the store DB 106, and also adds a record concerning dispensing of a carton product to the fixture event log in the store DB 106.

An operator (salesperson) unwraps the package of the removed carton product, picks up a plurality of pack products, and restocks the pack products into the pack fixture 50. At this time, the operator causes the barcode scanner of the fixture management terminal 70 to read a JAN code of the pack products.

The fixture supporting unit 101 acquires the JAN code of the pack products of the replenishment brand from the fixture management terminal 70, and identifies, from the by-store brand information table in the store DB 106, the brand information in which the JAN code is set as a pack code to extract a brand ID corresponding to the JAN code from this brand information. With these operations, the fixture supporting unit 101 checks that the brand ID acquired in advance together with the operation ID for the first restock request operation and the brand ID corresponding to the JAN code of the pack products match each other. The fixture supporting unit 101 extracts position information on a magazine 513 to which this brand ID is assigned, from the pack-fixture management information in the fixture setting information in the store DB 106. The fixture supporting unit 101 transmits, to the first control unit 30, a projection instruction including the position information and a report designation for the restock reporting display. With these operations, in the pack fixture 50, the projector 56 is controlled to output the restock reporting display that indicates the location of a magazine 513 to which the brand ID of the replenishment brand is assigned.

After this, upon receiving notification of restock completion from the first control unit 30, the fixture supporting unit 101 updates the remaining quantity in the magazine 513 serving as the target in the pack-fixture management information in the fixture setting information in the store DB 106, on the basis of the quantity included in this notification. In addition, the fixture supporting unit 101 adds a record concerning the restock of pack products to the fixture event log in the store DB 106. The date and time, the fixture ID (pack fixture 50), the event ID (restock), the brand ID (brand ID of the replenishment brand), the quantity (quantity of restocks) are set in this record.

The second and third restock request operations described above are also performed at the time of newly stocking a tobacco product.

In this case, the brand information in which the JAN code of a pack product transmitted from the fixture management terminal 70 is stored as a pack code is not stored in the by-store brand information table in the store DB 106. In addition, the brand information in which the JAN code of a carton product transmitted from the fixture management terminal 70 is stored as a carton code is also not stored in the by-store brand information table. Furthermore, a record in which a brand ID corresponding to the JAN code of the pack product or the carton product is set does not exist in the pack-fixture management information or the carton-fixture management information in the fixture setting information in the store DB 106.

Thus, in response to the second restock request operation, the fixture supporting unit 101 looks up the fixture setting information in the store DB 106 to search for a magazine 513 to which no brand is assigned. Similarly, in response to the third restock request operation, the fixture supporting unit 101 search for a storage region to which no brand is assigned.

The magazine 513 to which no brand is assigned can be identified by searching for the position information on a magazine 513 to which no brand ID is set in the pack-fixture management information. The storage region to which no brand is assigned can be identified by searching for the position information on the storage region to which no brand ID is set in the carton-fixture management information.

In a case where a magazine 513 to which no brand is assigned can be identified, the fixture supporting unit 101 transmits, to the first control unit 30, a projection instruction including the position information on the unassigned magazine 513 and a report designation for the restock reporting display. After this, the fixture supporting unit 101 performs processes similar to those performed at the time of restocking a tobacco product described above.

On the other hand, in a case where a storage region to which no brand is assigned can be identified, the fixture supporting unit 101 transmits, to the second control unit 40, a restock instruction including the position information on the unassigned storage region. After this, the fixture supporting unit 101 performs processes similar to those performed at the time of restocking a tobacco product described above.

The brand ID of a newly stocked brand is acquired from the brand master table in the store DB 106. Specifically, the fixture supporting unit 101 identifies, in the brand master table in the store DB 106, brand information in which the JAN code of the pack product transmitted from the fixture management terminal 70 is stored as a pack code, and can acquire the brand ID from the brand information as a brand ID of a newly stocked brand. In addition, the fixture supporting unit 101 identifies, in the brand master table in the store DB 106, brand information in which the JAN code of a carton product transmitted from the fixture management terminal 70 is stored as a carton code, and can acquire the brand ID from the brand information as a brand ID of a newly stocked brand.

However, in some cases, there is no magazine 513 or no storage region to which no brand is assigned. In this case, the fixture supporting unit 101 checks whether or not renewal-or-discontinuation reservation information is set in the fixture setting information in the store DB 106. In a case where the renewal-or-discontinuation reservation information is set, the fixture supporting unit 101 uses the brand ID of a renewed-or-discontinued brand indicated in this renewal-or-discontinuation reservation information to extract all pieces of position information on magazines 513 in the pack fixture 50 associated with the brand ID of this renewed-or-discontinued brand, from the pack-fixture management information in the fixture setting information in the store DB 106. In addition, the fixture supporting unit 101 transmits, to the first control unit 30, a projection instruction including all pieces of extracted position information and a report designation for the collective removal reporting display. In addition, the fixture supporting unit 101 extracts all pieces of position information on storage regions in the carton fixture 60 associated with the brand ID of the renewed-or-discontinued brand, from the carton-fixture management information in the fixture setting information in the store DB 106. In addition, the fixture supporting unit 101 transmits, to the second control unit 40, a removal instruction including all the pieces of extracted position information. With this operation, the projector 56 is controlled in the pack fixture 50 to perform the restock reporting display that indicates positions of all the magazines 513 to which the brand ID of the renewed-or-discontinued brand is assigned and also encourages the collective removal. In addition, the carton-position reporting LED 62 collectively indicates the positions of all the storage regions that store carton products of the renewed-or-discontinued brand.

Upon removal of a tobacco product of a renewed-or-discontinued brand by an operator from the pack fixture 50 and the carton fixture 60 in response to the instruction of collective removal described above, processes similar to those performed in a case of the second and third restock request operations described above are performed. In other words, the fixture supporting unit 101 transmits a projection instruction or a restock instruction to the first control unit 30 and the second control unit 40. The projection instruction or the restock instruction includes the position of a magazine 513 or the position of a storage region into which a pack product and a carton product of the newly stocked brand should be stocked and to which the renewed-or-discontinued brand is assigned. This makes it possible to restock a tobacco product of the newly stocked brand.

On the other hand, in a case where the renewal-or-discontinuation reservation information is not set, the fixture supporting unit 101 gives the management operation processing unit 104, which will be described later, an instruction to cause the fixture management terminal 70 to display a renewed-or-discontinued brand selection screen. After this, the fixture supporting unit 101 acquires renewal-or-discontinuation designation information transmitted from the fixture management terminal 70. Then, processes similar to those performed in a case where the renewal-or-discontinuation reservation information is set are performed.

The customer management unit 102 mainly manages mainly-smoked brand information on each customer as customer information.

Specifically, upon acquiring a customer ID from the order terminal 20, the customer management unit 102 extracts a mainly-smoked brand ID corresponding to the customer ID from the customer management DB 105, and transmits the extracted mainly-smoked brand ID to the order terminal 20. On the other hand, in a case where a mainly-smoked brand ID corresponding to the customer ID is not stored in the customer management DB 105, the customer management unit 102 transmits, to the order terminal 20, mainly-smoked brand non-set information indicating that the mainly-smoked brand ID is not set.

With this configuration, in a case where the mainly-smoked brand ID is transmitted to the order terminal 20, a display (brand ordering screen that will be described later) is outputted, this display making it possible to easily order, on the order terminal 20, a tobacco product of a brand identified with the mainly-smoked brand ID, as described above. Thus, the customer management unit 102 can also be called a brand acquisition means that acquires a registered brand identifier (mainly-smoked brand ID) by which a mainly-smoked brand of the customer can be identified, on the basis of information that can be obtained from customer's mobile terminal that a customer carries or a living body of the customer. In addition, the customer management unit 102 can also be called a display processing means that causes the order terminal 20 to display a brand designation display that makes it possible to perform a designating operation for a tobacco product of a brand identified with the acquired registered brand identifier (mainly-smoked brand ID).

In a case where a customer ID is associated with a plurality of mainly-smoked brand IDs in the customer management DB 105, the customer management unit 102 extracts the plurality of mainly-smoked brand IDs from the customer management DB 105, and transmits the extracted plurality of mainly-smoked brand IDs to the order terminal 20.

This makes it possible to display at the order terminal 20 so as to be able to perform an operation of collectively designating tobacco products of a plurality of brands identified with the plurality of mainly-smoked brand IDs, as described later. Thus, the customer management unit 102 can be called a brand acquisition means that acquires a plurality of registered brand identifiers concerning a customer, and can also be called a display processing means that causes the order terminal 20 to display a brand designation display that makes it possible to perform an operation of collectively designating tobacco products of a plurality of brands identified with the plurality of registered brand identifiers.

This makes it possible to easily designate a tobacco product of a desired brand with the order terminal 20 even in a case of a smoker (customer) that changes brands in accordance with environments, situations, or the like.

In addition, in a case of receiving a request for mainly-smoked brand update from the order terminal 20, the customer management unit 102 uses a customer ID included in the request, the original mainly-smoked brand ID, and a new mainly-smoked brand ID to replace, with the new mainly-smoked brand ID, the mainly-smoked brand ID corresponding to the customer ID in the customer management DB 105. Thus, the customer management unit 102 can be called an update processing means that performs update processing for replacing a registered brand identifier (mainly-smoked brand ID) of the customer stored in the customer brand storage unit (store DB 106), with the identified brand identifier (new mainly-smoked brand ID).

Incidentally, in a case where a plurality of mainly-smoked brand IDs is associated with a customer ID in the customer management DB 105, the customer management unit 102 replaces, with the new mainly-smoked brand ID, a mainly-smoked brand ID equal to the original mainly-smoked brand ID included in the request from among the plurality of mainly-smoked brand IDs corresponding to the customer ID stored in the customer management DB 105.

In addition, in a case where the original mainly-smoked brand ID is not included in the request from the order terminal 20 (in a case where the mainly-smoked brand ID is not set for the customer), the customer management unit 102 sets a new mainly-smoked brand ID included in this request, as a mainly-smoked brand ID corresponding to the customer ID in the customer management DB 105. In a case where the original mainly-smoked brand ID is not included in the request from the order terminal 20 and where a mainly-smoked brand ID has already been set for the customer, the customer management unit 102 additionally sets a new mainly-smoked brand ID included in the request. With these operations, a plurality of mainly-smoked brands are registered for the customer in the customer management DB 105.

The order-terminal supporting unit 103 supports processing performed in the order terminal 20 and in particular, manages various types of screens displayed on the order terminal 20. In this exemplary embodiment, the order-terminal supporting unit 103 generates or updates screen data on a brand selection screen to be displayed on the order terminal 20, and transmits the screen data to the order terminal 20.

For example, in a case where a tobacco product of a newly stocked brand described above is stocked, the order-terminal supporting unit 103 automatically updates screen data on a brand selection screen so as to be able to select a tobacco product of the newly stocked brand on the brand selection screen on the order terminal 20, and transmits the updated screen data to the order terminal 20. In addition, in a case where a tobacco product of a renewed-or-discontinued brand is collectively dispensed, the order-terminal supporting unit 103 automatically updates screen data on the brand selection screen so that the tobacco product of the renewed-or-discontinued brand cannot be selected on the brand selection screen on the order terminal 20, and transmits the updated screen data to the order terminal 20.

Here, various forms can be considered for the screen data transmitted by the order-terminal supporting unit 103 to the order terminal 20 to change a brand selection screen, and can also be considered for the method of displaying the changed brand selection screen on the order terminal 20. In this exemplary embodiment, there is no limitation on them. For example, it may be possible to employ a configuration in which brand information including a brand name or a brand image or the like and position information used to display the brand information are transmitted to the order terminal 20 as screen data; a brand selection screen is automatically changed at the order terminal 20 on the basis of the screen data; and the changed brand selection screen is displayed. In addition, it may be possible to employ a configuration in which the order-terminal supporting unit 103 generates web page data on a brand selection screen, for example, using hypertext markup language (HTML) or extensible markup language (XML); the data is transmitted to the order terminal 20; and the order terminal 20 reads the data on a browser to display the brand selection screen.

The management operation processing unit 104 manages the fixture management terminal 70. In particular, the management operation processing unit 104 controls, for example, display on the fixture management terminal 70 or manages information on the pack fixture 50 or the carton fixture 60 set through operations performed to the fixture management terminal 70.

For example, in a case of acquiring ordered brand information from the order terminal 20 during an operation of restocking a tobacco product, the management operation processing unit 104 causes the fixture management terminal 70 to output display for indicating that an order comes, as described above.

In addition, in a case where a certain brand is selected and a reservation about this brand being stopped dealing with is selected on a menu displayed on the fixture management terminal 70, the management operation processing unit 104 acquires renewal-or-discontinuation reservation information including a brand ID of the brand from the fixture management terminal 70, and sets the acquired renewal-or-discontinuation reservation information in the fixture setting information in the store DB 106.

Furthermore, in a case where renewal-or-discontinuation reservation information is not set at the time of restocking a tobacco product of a newly stocked brand, the management operation processing unit 104 gives the fixture management terminal 70 an instruction to display a brand list for an operator to select a renewed-or-discontinued brand. With this operation, the fixture management terminal 70 displays the brand list to enable an operator to select the renewed-or-discontinued brand. In addition, the management operation processing unit 104 acquires, from the fixture management terminal 70, renewal-or-discontinuation designation information including a brand ID of the selected renewed-or-discontinued brand.

### [Fixture Management Menu]

Next, a fixture management menu displayed on the fixture management terminal 70 will be described.

The fixture management menu includes, for example, a restock request menu and a renewed-or-discontinued brand selection menu. Below, the restock request menu and the renewed-or-discontinued brand selection menu, which are a portion of the fixture management menu, will be described.

The restock request menu includes a menu in which a brand to be restocked is selected through a screen operation, a "Scan a pack product to restock it" menu, and "Scan a carton product to restock it" menu.

Upon executing a menu for making selection through the screen operation, a brand list is displayed to cause an operator to select a brand to be restocked. This operation by the operator in connection with the menu corresponds to the first restock request operation described above.

Upon executing the "Scan a pack product to restock it" menu or "Scan a carton product to restock it" menu, a barcode scanner coupled to the fixture management terminal 70 is activated, and is brought into a state where the barcode attached on the package of the tobacco product can be read. The operation by an operator in connection with these menus corresponds to the second or third restock request operation.

Upon executing the renewed-or-discontinued brand selection menu, a renewed-or-discontinued brand selection screen is displayed in order to be able to make selection of a brand (renewed-or-discontinued brand) that is currently dealt with but will be stopped dealing with in the future. The renewed-or-discontinued brand selection screen includes a brand list. In a case where this menu is executed when a tobacco product is not newly restocked, the brand selected from this brand list is brought into a reservation state as the renewed-or-discontinued brand. That is, the renewal-or-discontinuation reservation information including a brand ID of the selected brand is transmitted from the fixture management terminal 70 to the supporting PC 10, and is stored, as described above.

Furthermore, the renewed-or-discontinued brand selection screen can also be displayed at the time of newly restocking a tobacco product. In this case, renewal-or-discontinuation designation information including a brand ID of the selected brand is transmitted from the fixture management terminal 70 to the supporting PC 10, as described above.

### [Order Terminal]

The order terminal 20 includes, for example, the information acquisition unit 201, the display processing unit 202, and the order reception unit 203. These units are software elements, and are each achieved with a control program stored in the memory 22 such as a RAM or ROM being executed by the CPU 21.

The information acquisition unit 201 can acquire a captured image from the imaging unit 26, and can further acquire, from the communication unit 25, customer information received from customer's mobile terminal.

In a case where the acquired captured image indicates a barcode attached on a package of a tobacco product, the information acquisition unit 201 can acquire a JAN code by applying an existing barcode reading process to the captured image.

In a case where the acquired captured image indicates a two-dimensional code (QR code (registered trademark) or the like) displayed on customer's mobile terminal, the information acquisition unit 201 can acquire a brand ID or a JAN code of a mainly-smoked brand by applying an existing two-dimensional code reading process to the captured image. In this case, a dedicated application is provided and the application is installed and executed on customer's mobile terminal. This makes it possible to display, on the mobile terminal, a two-dimensional code obtained by encoding the mainly-smoked brand ID of the customer stored in this mobile terminal. The customer causes the imaging unit 26 of the order terminal 20 to capture display of this two-dimensional code, which enables the information acquisition unit 201 to acquire a mainly-smoked brand ID from the two-dimensional code.

In a case where the acquired captured image is a biometric image (for example, vein image) for biometric recognition, the information acquisition unit 201 can acquire biometric identification information from the biometric image. This acquired biometric identification information may be used directly as a customer ID or may be used for user authentication. The information acquisition unit 201 transmits the acquired biometric identification information to the supporting PC 10.

Furthermore, the information acquisition unit 201 can acquire the customer ID from the customer information that has been acquired through communication. In this case, by executing a dedicated application installed on customer's mobile terminal, it is possible to transmit the customer ID from the mobile terminal to the order terminal 20 through near-field communication. The information acquisition unit 201 transmits the acquired customer ID to the supporting PC 10.

The display processing unit 202 causes a display unit of the touch panel unit 23 to display a brand ordering screen in conjunction with the brand selection screen described above. Upon detecting, by a touch sensor of the touch panel unit 23, a user operation to this brand selection screen or this brand ordering screen, the display processing unit 202 performs various types of processing in accordance with the detected user operation.

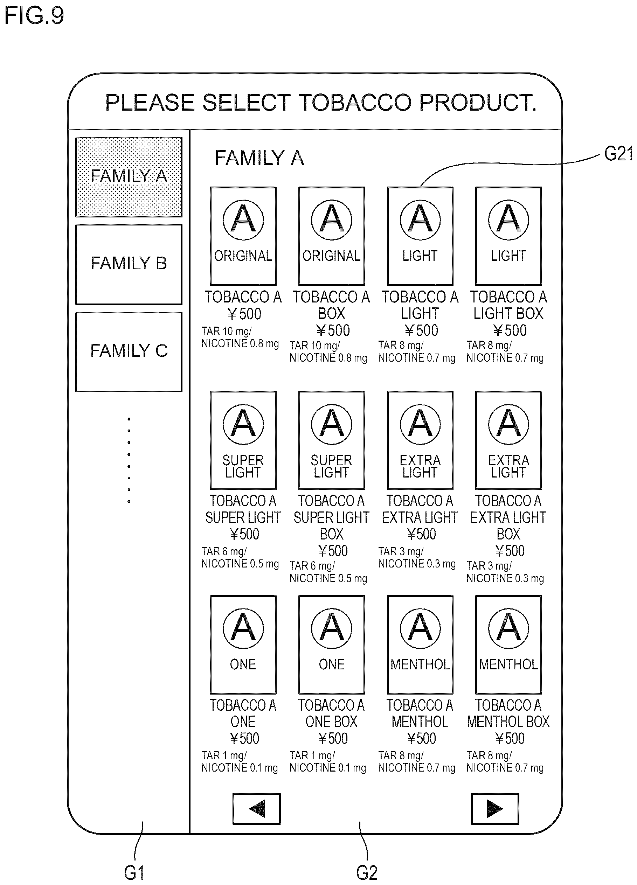

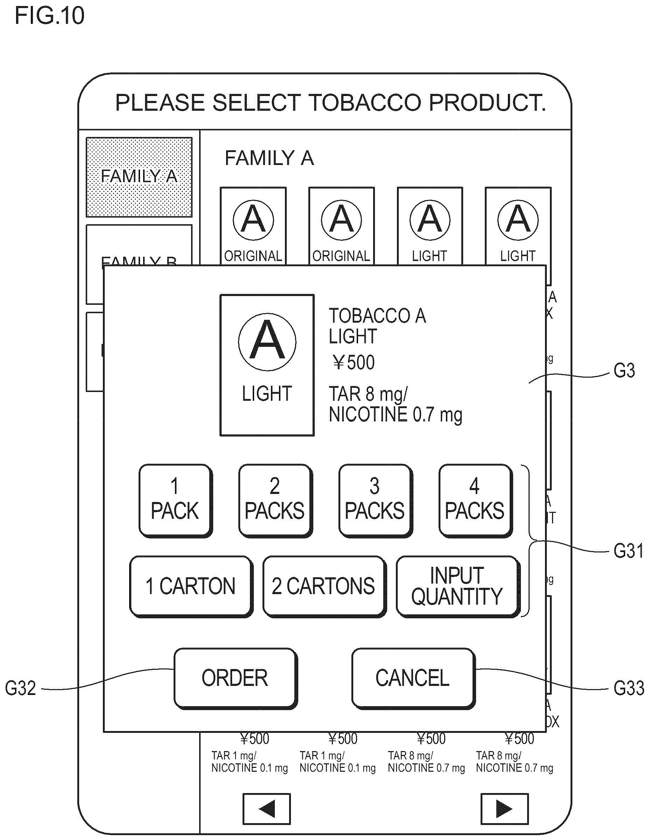

Fig. 9 is a diagram illustrating an example of the brand selection screen. Fig. 10 is a diagram illustrating an example of the brand ordering screen.

The brand selection screen displayed on the order terminal 20 includes a brand group selection part G1 and an individual brand selection part G2. The brand group selection part G1 is used to select a brand group. The individual brand selection part G2 displays brand information on tobacco products of a plurality of brands that belong to the brand group selected in the brand group selection part G1.

As described above, the groups of brands of tobacco products are categorized into brand groups by a common name (a representative name of the brand) included in each of the brand names. In the example of Fig. 9, a brand group "Family A" including a representative name of the brand "A" common to the brand names is selected in the brand group selection part G1. Brand information on tobacco products of all the brands including the common representative name of the brand "A" is displayed on the individual brand selection part G2 in a predetermined layout. In a case where all the pieces of brand information cannot be displayed in one screen, brand information groups each serving as a partial group of the brand group "Family A" are sequentially displayed through scrolling or the like.

In a case of operating the order terminal 20 to order a tobacco product of a desired brand, a customer or a salesperson operates such a brand selection screen to search for a desired brand and press a portion of the image of the desired brand in the brand selection screen, which results in a brand ordering screen G3 illustrated in Fig. 10 and concerning the tobacco product of the brand being displayed in a pop-up manner.

The brand ordering screen G3 is a screen used to place an order for the tobacco product of the brand selected on the brand selection screen. The brand ordering screen G3 includes brand information on the selected tobacco product of the brand and also includes an order unit designating part G31, an order confirmation operation part G32, an order cancellation operation part G33.

The order unit designating part G31 includes buttons so as to be able to designate, through one operation, the quantity of ordered pack products such as "1 pack," "2 packs," "3 packs," and "4 packs," and the quantity of ordered carton products such as "1 carton" and "2 cartons." This can eliminate complicated operations such as inputting the quantity, enabling a customer or a salesperson to input the unit of order and the quantity through a simplified operation. On the other hand, in a case of designating a unit of order other than those described above, an item "input the quantity" can be selected to display another screen for inputting the quantity of pack products or carton products.

The customer or the salesperson can press the order confirmation operation part G32 to order the tobacco product of the selected brand with the designated unit of order and the designated quantity.

Thus, it can be said that the brand ordering screen G3 is a brand designation display that makes it possible to perform a designating operation for a tobacco product of a target brand.

In a case of acquiring a brand ID or a JAN code with the information acquisition unit 201, the display processing unit 202 eliminates the need of the selection operation for a desired brand on the brand selection screen, and can provide a display similar to a state where a tobacco product of a brand identified using the brand ID or the JAN code is selected on the brand selection screen described above, in other words, can collectively display, on the brand selection screen, the brand ordering screen G3 concerning the tobacco product of the brand.

In addition, in a case of acquiring a mainly-smoked brand ID from the supporting PC 10 (customer management unit 102) in association with a customer ID being transmitted by the information acquisition unit 201 to the supporting PC 10, the display processing unit 202 can collectively display, on the brand selection screen, the brand ordering screen G3 concerning the tobacco product of the brand identified using the mainly-smoked brand ID, as in the case described above.

Thus, it can be said that the display processing unit 202 is a display processing means that causes the order terminal 20 to display a brand designation display that makes it possible to perform a designating operation for a tobacco product of a brand identified using the acquired registered brand identifier (mainly-smoked brand ID).

A customer causes a mobile terminal to communicate with the order terminal 20, or lets the order terminal 20 capture its own biological information, or lets the order terminal 20 capture a two-dimensional code displayed on the mobile terminal. This enables the customer to easily order a tobacco product of the desired brand, without the need of operation of searching for a tobacco product of a desired brand from among tobacco products of a plurality of brands.

Furthermore, in a case of acquiring a plurality of mainly-smoked brand IDs from the supporting PC 10 (customer management unit 102), the display processing unit 202 can collectively display, on the brand selection screen, a collective brand order screen that makes it possible to collectively order the tobacco products of a plurality of brands identified using the plurality of mainly-smoked brand IDs.

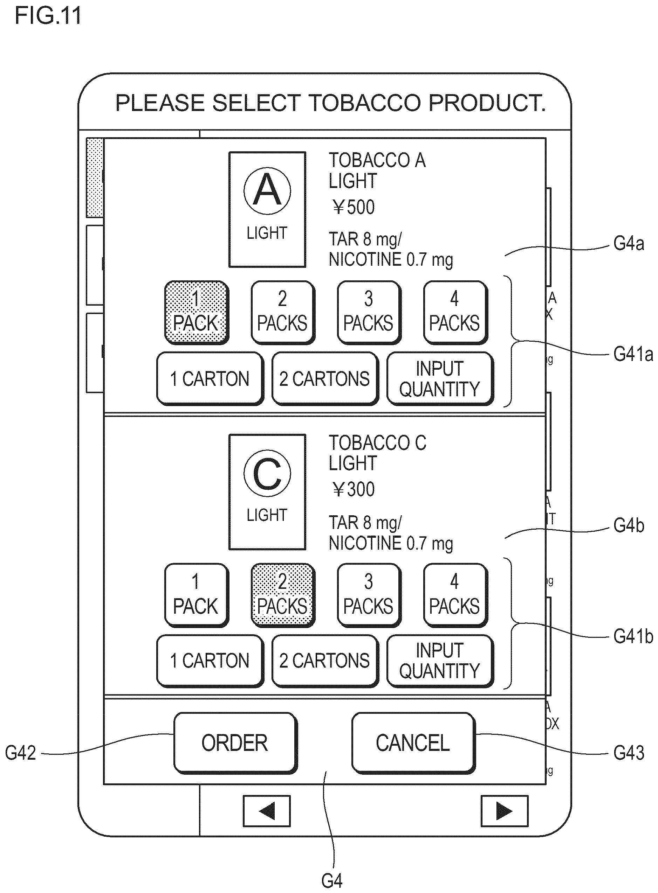

Fig. 11 is a diagram illustrating an example of the collective brand order screen.

A collective brand order screen G4 is also a screen displayed on the brand selection screen in a pop-up manner. The collective brand order screen G4 is separated in accordance with tobacco products of a plurality of individual brands (G4a and G4b in Fig. 11), and includes brand information and order unit designating parts G41a and G41b. The collective brand order screen G4 further includes an order confirmation operation part G42 and an order cancellation operation part G43.

The order unit designating parts G41a and G41b are configured such that the quantity of ordered pack products and the quantity of ordered carton products can be designated for each tobacco product of brand, as with the brand ordering screen G3 described above.

With the order confirmation operation part G42 being operated, it is possible to collectively order tobacco products of a plurality of brands for which the quantity of order is designated in the order unit designating part G41a or G41b.

A customer or a salesperson designates tobacco products of one or more brands (may designate all the brands) that the customer or the salesperson wishes to order from among tobacco products of a plurality of brands displayed on the collective brand order screen G4, and also designate a unit of order thereof. In this state, the customer or the salesperson presses the order confirmation operation part G42. This makes it possible to order the tobacco products of one or more brands of which unit of order has been designated, the order being placed in the designated unit of order and in the designated quantity.

Thus, it can be said that the collective brand order screen G4 is a collective brand designation display that enables tobacco products of a plurality of brands to be collectively ordered. The display processing unit 202 is a brand acquisition means that acquires a plurality of registered brand identifiers concerning a customer, and it can be said that the display processing unit 202 is a display processing means that causes the order terminal 20 to display the collective brand designation display.

This makes it possible to easily designate tobacco products of a plurality of desired brands with the order terminal 20 even in a case of a smoker (customer) that changes brands in accordance with environments, situations, or the like.

In a case of acquiring the mainly-smoked brand non-set information from the supporting PC 10 (customer management unit 102), it is only necessary that the display processing unit 202 causes the brand selection screen to be displayed.

Upon detecting an operation of pressing the order confirmation operation part G32 or G42, the order reception unit 203 identifies a brand ID of the selected tobacco product, an order unit ID indicating either one of or both of a pack product and a carton product, and the quantity. Thus, it can be said that the order reception unit 203 is an identification means that identifies a brand identifier of a tobacco product designated through a designating operation performed by a customer to the order terminal 20.

The order reception unit 203 transmits, to the supporting PC 10, ordered brand information including the identified brand ID, the order unit ID indicating either one of or both of a pack product and carton product, and the quantity. This ordered brand information is acquired by the fixture supporting unit 101 of the supporting PC 10, and the pack fixture 50 or the carton fixture 60 is controlled.

On the other hand, upon the order cancellation operation part G33 or G43 being pressed, the brand ordering screen G3 or G4 is caused to disappear, and the selected brand or quantity is cancelled.

### [Update of Mainly-Smoked Brand]

Incidentally, a customer (smoker) may change the mainly-smoked brand due to various factors such as introduction of a new tobacco product or change of preference. Thus, the mainly-smoked brand information managed in the customer management DB 105 in the supporting PC 10 is desired to be periodically updated in response to such change of mainly-smoked brand.

Thus, in this exemplary embodiment, the order terminal 20 detects that a customer orders a tobacco product of a brand other than the mainly-smoked brand, and the mainly-smoked brand information managed in the customer management DB 105 by the customer management unit 102 of the supporting PC 10 is updated as described above.

In this exemplary embodiment, even if a customer for which no mainly-smoked brand ID is set orders a tobacco product of a certain brand, the mainly-smoked brand information is updated with a brand ID of the ordered tobacco product.

In the order terminal 20, in a case of acquiring the mainly-smoked brand ID from the supporting PC 10 (customer management unit 102), the display processing unit 202 causes the brand ordering screen G3 or G4 concerning a tobacco product of a brand identified using the mainly-smoked brand ID to be displayed in a pop-up manner, as described above. After this, in association with detection of an operation of pressing the order confirmation operation part G32, the order reception unit 203 identifies the brand ID of the selected tobacco product or the like, and transmits ordered brand information including the brand ID or the like to the supporting PC 10.

Then, the order reception unit 203 determines whether or not the identified brand ID and the mainly-smoked brand ID previously acquired in the display processing unit 202 match each other. Here, in a case where they are determined to match each other, no particular action is made. In a case where the order reception unit 203 determines that they do not match each other, the display processing unit 202 causes the order terminal 20 to display a mainly-smoked brand update confirmation screen. The mainly-smoked brand update confirmation screen makes it possible to perform a selection operation as to whether or not the brand of a tobacco product displayed on the brand ordering screen G3 on which the order confirmation operation part G32 is pressed is updated as the mainly-smoked brand. In addition, the display processing unit 202 may display the mainly-smoked brand update confirmation screen so as to be able to perform a selection operation as to whether this brand is updated as the mainly-smoked brand or is added as the mainly-smoked brand or nothing is done.

In a case where the mainly-smoked brand non-set information has been acquired from the supporting PC 10, the display processing unit 202 may cause the order terminal 20 to display the mainly-smoked brand update confirmation screen. The mainly-smoked brand update confirmation screen makes it possible to perform a selection operation as to whether or not the brand of the tobacco product displayed on the brand ordering screen G3 on which the order confirmation operation part G32 is pressed is registered as the mainly-smoked brand.

In a case where updating the mainly-smoked brand is selected on this selection screen, the display processing unit 202 transmits a request for mainly-smoked brand update to the supporting PC 10. The request includes a customer ID, a mainly-smoked brand ID (original mainly-smoked brand ID) that has been previously acquired from the supporting PC 10, and a brand ID (new mainly-smoked brand ID) included in this ordered brand information. In accordance with this request, the customer management unit 102 updates the mainly-smoked brand information in the customer management DB 105, as described above.

As described above, in this exemplary embodiment, in response to an order for a tobacco product of a brand differing from the mainly-smoked brand managed in the customer management DB 105 of the supporting PC 10, a customer is urged to select whether or not the mainly-smoked brand of the customer should be changed (may include whether or not the brand should be added). This makes it possible to grasp the timing of change of mainly-smoked brand of the customer in a real-time manner. Thus, it is possible to easily order a tobacco product of this brand on the basis of the latest brand information that the customer wishes.

Furthermore, after the ordered brand information is transmitted to the supporting PC 10, the order terminal 20 is caused to display such a mainly-smoked brand update confirmation screen. This makes it possible to cause a customer to operate the confirmation screen during a time when an operator (salesperson) removes a tobacco product of the ordered brand from the pack fixture 50 or the carton fixture 60. Thus, it is possible to prevent the operation on the confirmation screen from causing a waste in payment time at the register counter.

Furthermore, in a case where a plurality of mainly-smoked brand IDs are acquired from the supporting PC 10 and the brand ID included in the ordered brand information by the order reception unit 203 differs from any of the plurality of mainly-smoked brand IDs, the display processing unit 202 can cause the order terminal 20 to further display an updated brand selection screen that makes it possible to perform a selection operation for a mainly-smoked brand that should be updated, from among the plurality of mainly-smoked brands.

This selection screen may be the same screen as the mainly-smoked brand update confirmation screen that makes it possible to perform the selection operation as to whether or not a mainly-smoked brand is updated or may be a screen displayed after updating of the mainly-smoked brand is selected.

In this case, the display processing unit 202 transmits a request for mainly-smoked brand update to the supporting PC 10. The request includes, as the original mainly-smoked brand ID, a mainly-smoked brand ID of the mainly-smoked brand selected to be updated, and also includes, as a new mainly-smoked brand ID, a brand ID included in the ordered brand information.

In this manner, it is possible to grasp, in a real-time manner, the timing of change of a mainly-smoked brand of a customer for which a plurality of mainly-smoked brands are registered. In addition, it is possible to easily order a tobacco product of the plurality of brands on the basis of a plurality of pieces of latest brand information that such a customer wishes.

### [Example of Operation of Supporting PC 10]

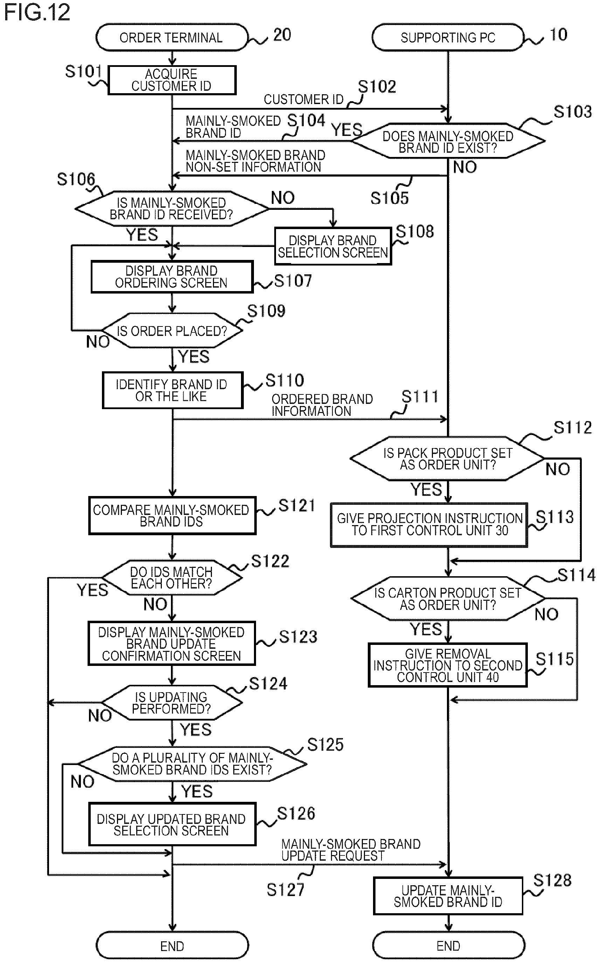

Next, an example of operation performed by the subject system 1 will be described. With reference to Fig. 12, description will be made in particular of an example of operations by the supporting PC 10 and the order terminal 20 in a case where a tobacco product is ordered using the order terminal 20. Fig. 12 is a sequence chart illustrating an example of operation by the subject system 1.

Here, it is assumed that a customer waves its own mobile terminal over the order terminal 20 to transmit a customer ID from the mobile terminal to the order terminal 20 through wireless communication.

The order terminal 20 (information acquisition unit 201) acquires a customer ID from customer's mobile terminal through wireless communication (S101). The order terminal 20 transmits the acquired customer ID to the supporting PC 10 (S102).

Upon receiving the customer ID from the order terminal 20, the supporting PC 10 (customer management unit 102) searches the customer management DB 105 for this customer ID, and determines whether or not a mainly-smoked brand ID is associated with this customer ID (S103). In a case where the mainly-smoked brand ID is associated with the customer ID (S103; YES), the supporting PC 10 transmits this mainly-smoked brand ID back to the order terminal 20 (S104). In a case where the mainly-smoked brand ID is not associated with the customer ID (S103; NO), the supporting PC 10 transmits mainly-smoked brand non-set information back to the order terminal 20 (S105).

Upon receiving the mainly-smoked brand ID from the supporting PC 10 (S106; YES), the order terminal 20 (display processing unit 202) displays, on the brand selection screen, the brand ordering screen G3 concerning a tobacco product of a brand identified using the mainly-smoked brand ID, without the need of any selection operation for a desired brand on the brand selection screen (S107).

On the other hand, upon receiving the mainly-smoked brand non-set information from the supporting PC 10 (S106; NO), the order terminal 20 (display processing unit 202) displays the brand selection screen (S108). Upon a pressing operation being performed to an image portion of the desired brand on this brand selection screen, the order terminal 20 displays the brand ordering screen G3 concerning this tobacco product of a brand in a pop-up manner (S107).

On the brand ordering screen G3, either one of or both of the quantity of ordered pack product and the quantity of ordered carton products are designated, and the order confirmation operation part G32 is pressed (S109).

However, although illustration is not given in Fig. 12, in a case where a pressing operation is performed to the order cancellation operation part G33 on the brand ordering screen displayed in association with reception of the mainly-smoked brand ID from the supporting PC 10, the brand ordering screen is caused to disappear, and the brand selection screen is displayed (S108).

Upon detecting an operation to the order confirmation operation part G32, the order terminal 20 (order reception unit 203) identifies a brand ID of a selected tobacco product, an order unit ID indicating either one of or both of a pack product and a carton product, and the quantity (S110).

At this time, the identified brand ID may be a mainly-smoked brand ID itself transmitted in (S104) or may differ from this mainly-smoked brand ID. For example, the latter case corresponds to a case where the cancellation operation part G33 is operated on a brand ordering screen displayed in connection with a tobacco product of a mainly-smoked brand, and the order confirmation operation part G32 is operated on a brand ordering screen displayed as a result of selection of a tobacco product of another brand on the brand selection screen.

The order terminal 20 (order reception unit 203) transmits, to the supporting PC 10, ordered brand information including the identified brand ID, an order unit ID indicating either one of or both of a pack product and a carton product, and the quantity (Sill).

It should be noted that, upon detection of an operation to the order confirmation operation part G32, the brand ordering screen is deleted.

Upon receiving the ordered brand information from the order terminal 20, the supporting PC 10 (fixture supporting unit 101) determines whether or not the order unit includes a pack product, on the basis of the order unit ID included in the ordered brand information (S112). In a case where the pack product is included (S112; YES), the supporting PC 10 transmits a projection instruction to the first control unit 30 (S113). At this time, on the basis of the brand ID of the ordered brand included in the ordered brand information, the supporting PC 10 (fixture supporting unit 101) extracts position information on a magazine 513 corresponding to the brand ID from pack-fixture management information included in fixture setting information in the store DB 106, and includes, in the projection instruction, this position information and the quantity included in the ordered brand information.

With this operation, on the basis of the projection instruction, the first control unit 30 (projection control unit 31) controls projection by the projector 56 of the pack fixture 50 to output a removal reporting display that indicates the position of the magazine 513 that stores a pack product of the brand identified using the brand ID.

On the other hand, the supporting PC 10 (fixture supporting unit 101) determines whether or not the order unit includes a carton product (S114). In a case where the order unit includes a carton product (S114; YES), the supporting PC 10 transmits a removal instruction to the second control unit 40 (S115). At this time, on the basis of a brand ID of an ordered brand included in ordered brand information, the supporting PC 10 (fixture supporting unit 101) extracts position information on a storage region corresponding to the brand ID from carton-fixture management information included in fixture setting information in the store DB 106, and includes, in the removal instruction, this position information and the quantity included in the ordered brand information.

Thus, on the basis of the position information included in the removal instruction, the second control unit 40 (position report processing unit 41) causes a carton-position reporting LED 62 corresponding to this position information to turn on.

After transmission of the ordered brand information (S111), the order terminal 20 (order reception unit 203) determines whether or not the brand ID identified in step (S110) and the mainly-smoked brand ID acquired in step (S104) match each other (S121).

In a case where they are determined to not match each other in step (S121) (S122; NO), the order terminal 20 (display processing unit 202) displays a mainly-smoked brand update confirmation screen as to whether or not updating is performed by using, as a mainly-smoked brand, a brand of a tobacco product identified using the brand ID identified in (S110), in other words, the brand of the tobacco product designated on the brand ordering screen G3 (S123). The case where they are determined to not match each other in step (S121) (S122; NO) includes a case where mainly-smoked brand non-set information is acquired in (S105). Moreover, on this mainly-smoked brand update confirmation screen, it may be possible to make selection as to whether or not the brand is added as the mainly-smoked brand, in addition to selection as to whether or not the mainly-smoked brand is to be updated.

In a case where updating the mainly-smoked brand is selected on the mainly-smoked brand update confirmation screen (S124; YES), the order terminal 20 (display processing unit 202) determines whether or not a plurality of mainly-smoked brand IDs are acquired in step (S104) (S125). In a case where a plurality of mainly-smoked brand IDs are acquired (S125; YES), the order terminal 20 (display processing unit 202) further displays an updated brand selection screen that makes it possible to perform an operation of selecting a mainly-smoked brand that should be updated, from among a plurality of mainly-smoked brands identified using the plurality of mainly-smoked brand IDs (S126). On this updated brand selection screen, it may be possible to perform a selection operation concerning another mainly-smoked brand being further added.

The order terminal 20 (display processing unit 202) transmits a mainly-smoked brand update request to the supporting PC 10 (S127). The mainly-smoked brand update request includes a customer ID acquired in step (S101). The mainly-smoked brand update request also includes, as the original mainly-smoked brand ID, a mainly-smoked brand ID of a mainly-smoked brand selected on the updated brand selection screen as this should be updated. The mainly-smoked brand update request also includes, as a new mainly-smoked brand ID, a brand ID identified in step (S110).

Here, in a case where one mainly-smoked brand ID is acquired in step (S104) (S125; NO), the order terminal 20 (display processing unit 202) does not display the updated brand selection screen, and transmits a mainly-smoked brand update request to the supporting PC 10 (S127). The mainly-smoked brand update request includes, as the original mainly-smoked brand ID, a mainly-smoked brand ID acquired in step (S104), and also includes, as a new mainly-smoked brand ID, a brand ID identified in step (S110).

In addition, although illustration is not given in Fig. 12, in a case where adding a mainly-smoked brand is selected on the mainly-smoked brand update confirmation screen displayed in step (S123) (S124; YES), step (S125) or step (S126) is not executed. Furthermore, the order terminal 20 (display processing unit 202) sets nothing as the original mainly-smoked brand ID. It is only necessary to transmit, to the supporting PC 10, a mainly-smoked brand update request including, as a new mainly-smoked brand ID, a brand ID identified in step (S110) (S127).

On the other hand, in a case where the brand ID identified in step (S110) and the mainly-smoked brand ID acquired in step (S104) match each other (S122; YES) or the mainly-smoked brand is selected to be not updated on the mainly-smoked brand update confirmation screen (S124; NO), no mainly-smoked brand update request is outputted and the processing ends.

Upon receiving the mainly-smoked brand update request, the supporting PC 10 (customer management unit 102) uses the customer ID included in the request, the original mainly-smoked brand ID, and the new mainly-smoked brand ID to replace the mainly-smoked brand ID corresponding to this customer ID in the customer management DB 105, with the new mainly-smoked brand ID (S128). In a case where the original mainly-smoked brand ID is not set in the received request, the supporting PC 10 (customer management unit 102) associates the new mainly-smoked brand ID included in the request with the customer ID in the customer management DB 105 to newly register it (S128).

Incidentally, in a case where a plurality of mainly-smoked brand IDs are associated with the customer ID in the customer management DB 105, the plurality of mainly-smoked brand IDs are transmitted from the supporting PC 10 to the order terminal 20 (S104). Upon receiving the plurality of mainly-smoked brand IDs from the supporting PC 10 (S106; YES), the order terminal 20 (display processing unit 202) can collectively display the collective brand order screen G4 concerning tobacco products of a plurality of brands identified using these mainly-smoked brand IDs (S107). In a case where a pressing operation is performed to the order confirmation operation part G42 in a state where the quantity of order is designated for each tobacco product of the plurality of brands on this collective brand order screen G4, identification is made for the plurality of brand IDs, as well as the unit of order and the quantity concerning each of the brand IDs (SI 10). In addition, ordered brand information including these pieces of identified information is transmitted to the supporting PC 10 (S111).

In this case, it is only necessary that, in the supporting PC 10, steps from (S112) to (S115) are executed for each brand of tobacco products.

In addition, in step (S121), all the mainly-smoked brand IDs acquired in step (S104) and all the brand IDs identified in step (S110) are compared. It is only necessary that the mainly-smoked brand update confirmation screen is displayed in a case where at least one brand ID that does not match exists (S123).

Although illustration is not given in Fig. 12, a customer is able to continuously order tobacco products of a plurality of brands. For example, upon a pressing operation being performed to the order confirmation operation part G32 of the brand ordering screen G3 or the order confirmation operation part G42 of the collective brand order screen G4 (S109; YES), the brand ordering screen G3 or the collective brand order screen G4 is deleted temporarily. After this, upon operation performed by the customer on the brand selection screen to cause the brand ordering screen G3 concerning another brand to be displayed, it is possible to continuously order a tobacco product of another brand. In this case, processes from (S121) to (S126) may be collectively executed after the ordered brand information on tobacco products of the plurality of brands is transmitted to the supporting PC 10 (S111), or may be each executed every time an order is placed (S109; YES).

Moreover, after the brand ordering screen G3 or the collective brand order screen G4 is deleted, it may be possible to output a display indicating that a product is being removed (hereinafter, referred to as display of removing), and display recommend information on another brand in this display. In this case, it may be possible to employ a configuration in which a predetermined operation (for example, a pressing operation or the like) is performed for the recommend information in the display of removing to newly display a brand ordering screen G3 concerning another brand. This enables a customer to consecutively order tobacco products of another brand indicated by the recommend information during a waiting time when a tobacco product of the brand that has been previously ordered is being removed.

However, the recommend information described above may be still displayed in a display indicating removal completion that is displayed after the display of removing, or may be displayed alongside of and together with the brand ordering screen G3 or the collective brand order screen G4.

In addition, there is no limitation as to the method of selecting a brand of a tobacco product displayed as recommend information. The brand that should be displayed as the recommend information may be selected on the basis of purchase history information on a customer in the supporting PC 10 or may be selected on the basis of brand information transmitted from an external service device.

### [Modification Example]

The exemplary embodiment described above has been given as an example, and details described above can be modified on an as-necessary basis within departing from the spirit.

For example, in the exemplary embodiment described above, the first control unit 30 that controls the pack fixture 50 and the second control unit 40 that controls the carton fixture 60 are provided separately. However, instead, one control unit that controls both the pack fixture 50 and the carton fixture 60 can be used. In addition, the supporting PC 10 and the control unit for the supporting PC 10 may be achieved as one control device.

In addition, the configurations of the pack fixture 50 and the carton fixture 60 are not limited to those described above.

In addition to the configuration using a projection image by the projector 56 as in the exemplary embodiment described above, the pack fixture 50 may employ a configuration in which an electronic shelf label is provided for each of the magazines 513, and the electronic shelf label of a magazine 513 that stores a tobacco product of the target brand is displayed differently from those of other magazines 513, thereby executing the removal reporting display or the restock reporting display.

Furthermore, the pack fixture 50 and the carton fixture 60 may be a device that has a function of automatically dispensing.

Furthermore, in the exemplary embodiment described above, the supporting PC 10 manages fixture setting information such as a correspondence relationship between the position of a magazine in the pack fixture 50 and a brand ID of a brand of a pack product stored in the magazine, and a correspondence relationship between the position of a storage region in the carton fixture 60 and a brand ID of a brand of a carton product stored in the storage region. However, the fixture setting information may be shared between the first control unit 30 and the supporting PC 10 and between the second control unit 40 and the supporting PC 10, or may be managed only by the first control unit 30 and the second control unit 40.

As described above, the customer management DB 105 and the customer management DB 105 stored in the supporting PC 10 may be stored in any device within the subject system 1 and may be stored in any device outside of the subject system 1, provided that the device can communicate with the supporting PC 10.

For example, the customer management DB 105 that stores mainly-smoked brand information on a customer may be provided in an external server device that can communicate with the supporting PC 10.

In addition, a mainly-smoked brand ID of a customer may be stored in a mobile terminal of the customer, and an application installed in the mobile terminal may manage the mainly-smoked brand ID. In this case, in a case of receiving a request for mainly-smoked brand update from the order terminal 20, the supporting PC 10 (customer management unit 102) may replace the mainly-smoked brand ID in the customer management DB 105 with the new mainly-smoked brand ID, and may also control to transmit a request for mainly-smoked brand update including the new mainly-smoked brand ID, to the mobile terminal of the customer. This transmission of the mainly-smoked brand update request can be achieved using various communication methods such as an email from the supporting PC 10 or an external server device. For an address of the mobile terminal, it may be possible to use a customer ID itself or use information held so as to be associated with the customer ID.

Furthermore, instead of the supporting PC 10 (customer management unit 102), the order terminal 20 (display processing unit 202) may transmit a request for mainly-smoked brand update to the mobile terminal of the customer. In this case, this request can be transmitted by using the communication unit 25 (near-field communication or the like) of the order terminal 20.

Upon receiving the mainly-smoked brand update request, the application of the mobile terminal of the customer is only necessary to update the mainly-smoked brand ID stored in the mobile terminal, as with the customer management unit 102 described above.

With the mobile terminal of the customer holding the mainly-smoked brand ID as described above, it is possible to transmit the mainly-smoked brand ID directly from the mobile terminal to the order terminal 20.

Furthermore, in addition to the mobile terminal of the customer, the mainly-smoked brand ID of the customer may be stored in a tobacco product device such as an aerosol inhalator or a mobile device of the customer such as an attachment unit to the tobacco product device. The mobile device of the customer can store and update the mainly-smoked brand ID by exchanging information through communication with the supporting PC 10, as with the customer's mobile terminal.

Furthermore, in the exemplary embodiment described above, in a case where a plurality of mainly-smoked brand IDs are registered for a customer, the updated brand selection screen is displayed and the customer is caused to select the mainly-smoked brand that should be updated. However, the supporting PC 10 (customer management unit 102) may automatically select the mainly-smoked brand that should be updated, without displaying this updated brand selection screen. That is, in a case where a plurality of mainly-smoked brand IDs (registered brand identifiers) are stored for the customer in the customer management DB 105 (customer brand storage unit), the customer management unit 102 automatically selects a mainly-smoked brand ID that should be updated, from among the plurality of mainly-smoked brand IDs, and replaces the selected mainly-smoked brand ID with a new mainly-smoked brand ID.

There is no limitation as to a method of selecting the mainly-smoked brand ID that should be updated. For example, in a case where a brand ID of a similar brand is associated with each brand in the brand master table in the store DB 106, the customer management unit 102 determines, as the mainly-smoked brand ID that should be updated, the original mainly-smoked brand ID that matches a brand ID of a similar brand associated with the new mainly-smoked brand ID in the brand master table. In addition, in a case where a registration date is further stored for each mainly-smoked brand ID in the customer management DB 105, the customer management unit 102 can determine, as the mainly-smoked brand ID that should be updated, the oldest or the latest mainly-smoked brand ID in terms of the registration date. Furthermore, in a case where a purchase history for a tobacco product is stored for each customer in the customer management DB 105, the customer management unit 102 identifies the latest purchase date for each mainly-smoked brand ID on the basis of the purchase history of the customer, and can determine, as the mainly-smoked brand ID that should be updated, the oldest mainly-smoked brand ID in terms of the identified purchase date.

By automatically selecting the mainly-smoked brand ID that should be updated as described above, the operation on the updated brand selection screen can be eliminated. This makes it possible to suppress a waste in payment time when a customer purchases a tobacco product.

Furthermore, in the exemplary embodiment described above, in association with detection of a pressing operation performed to the order confirmation operation part G32 or G42, the order reception unit 203 determines whether or not a brand ID identified as the target of order and a mainly-smoked brand ID that has been previously acquired match each other. In a case where they are determined to not match each other, the order reception unit 203 causes the mainly-smoked brand update confirmation screen to be displayed. However, the mainly-smoked brand ID may be forcefully updated without displaying this mainly-smoked brand update confirmation screen.

For example, in a case where the brand ID identified as the target of order and the mainly-smoked brand ID that has been previously acquired do not match each other, the order reception unit 203 may transmit, to the supporting PC 10, a mainly-smoked brand update request including, as a new mainly-smoked brand ID, a brand identified as the target of order, without displaying the mainly-smoked brand update confirmation screen (S 127). At this time, the order reception unit 203 includes the original mainly-smoked brand ID in the mainly-smoked brand update request to change the mainly-smoked brand ID, or does not include the original mainly-smoked brand ID to add the mainly-smoked brand ID.

The order reception unit 203 may automatically determine whether the mainly-smoked brand ID is changed into a brand ID identified as the target of order or the brand ID identified as the target of order is added as a new mainly-smoked brand ID. For example, in a case where a brand ID of a tobacco product displayed as recommend information is identified as the target order as described above, the order reception unit 203 may automatically determine whether the mainly-smoked brand ID is changed into the brand ID identified as the target of order or the brand ID identified as the target of order is added as a new mainly-smoked brand ID.

The brand of a tobacco product displayed as the recommend information is a brand that fits the preference of a customer, a brand that is highly like to fit the preference of the customer, a brand that a manufacturer or the like wishes to recommend the customer, or the like. Thus, by automatically registering it as a mainly-smoked brand as described above, it is possible to save customer's time and effort, and easily designate a tobacco product of a brand that the customer wishes.

In addition, the brand of a tobacco product displayed as recommend information differs from a mainly-smoked brand of the customer. Thus, in a case where a predetermined operation to the recommend information is detected, the order reception unit 203 may not determine whether or not the brand ID identified as the target of order and the mainly-smoked brand ID that has been previously acquired match each other.

Furthermore, in the sequence chart described above, a plurality of steps (processes) are sequentially described. However, the order of the steps performed in the exemplary embodiment is not limited to the order of the steps described above. In the exemplary embodiment, the order of the steps illustrated in the drawings may be exchanged, provided that the exchange does not impair the details of the steps.

In addition, a portion of or all of the details described above can be identified in the following manner. However, details described above are not limited to those described below.
(1) A tobacco product management system including: an order terminal capable of displaying brand information on tobacco products of a plurality of brands and capable of receiving a designating operation for a brand that a customer wishes to order from among the plurality of brands; and a supporting device that supports removal of a tobacco product of the brand designated in the designating operation received by the order terminal, the tobacco product management system including:
   a brand acquisition means configured to, on the basis of information obtained from a customer, acquire a registered brand identifier for identifying a registered brand of the customer stored in a customer brand storage unit;
   a display processing means configured to cause a display unit of the order terminal to display a brand designation display that makes it possible to perform a designating operation for a tobacco product of the registered brand identified using the acquired registered brand identifier;
   a brand identification means configured to identify a brand identifier of a tobacco product of a brand differing from the registered brand and designated in the designating operation performed to the order terminal by the customer; and
   an update processing means configured to perform update processing for replacing, with the identified brand identifier, the registered brand identifier of the customer stored in the customer brand storage unit.
(2) The tobacco product management system according to (1), further including:
   a determination means configured to determine whether or not the identified brand identifier and the registered brand identifier match each other, in which
   in a case where the determination means determines not matching each other, the display processing means causes the display unit of the order terminal to display a selection display that makes it possible to perform a selection operation as to whether or not to update the register brand to the brand of the tobacco product designated in the designating operation is updated as the registered brand.
(3) The tobacco product management system according to (2), in which
   in a case where a plurality of registered brand identifiers are stored for the customer in the customer brand storage unit, the display processing means causes the display unit of the order terminal to further display a selection display that makes it possible to perform a selection operation for a registered brand that should be updated, from among a plurality of registered brands identified using the plurality of registered brand identifiers.
(4) The tobacco product management system according to (2) or (3), in which
   after a brand identifier of a tobacco product designated in the designating operation by the customer on the order terminal is transmitted from the order terminal to the supporting device, the display processing means causes the display unit of the order terminal to display the selection display.
(5) The tobacco product management system according to any one of (1) to (4), in which
   in a case where a plurality of registered brand identifiers are stored for the customer in the customer brand storage unit, the update processing means automatically selects a registered brand identifier that should be updated, from among the plurality of registered brand identifiers, and performs the update processing for replacing the selected registered brand identifier with the identified brand identifier.
(6) The tobacco product management system according to any one of (1) to (5), in which
   the brand acquisition means acquires a plurality of registered brand identifiers for the customer, and
   in a case where the brand acquisition means acquires the plurality of registered brand identifiers, the display processing means causes the display unit of the order terminal to display a collective brand designation display that makes it possible to collectively order tobacco products of a plurality of brands identified using the plurality of registered brand identifiers.
(7) The tobacco product management system according to any one of (1) to (6), in which
   the customer brand storage unit is provided in the supporting device or another server device differing from the supporting device, and also in a mobile device of the customer, and
   in a case where the registered brand identifier stored in the customer brand storage unit is replaced with the identified brand identifier, the update processing means performs the update processing to both of the customer brand storage unit provided in the supporting device or said another server device and the customer brand storage unit provided in the mobile device of the customer.
(8) A tobacco product management method to be executed by a system including an order terminal capable of displaying brand information on tobacco products of a plurality of brands and capable of receiving a designating operation for a brand that a customer wishes to order from among the plurality of brands; and a supporting device that supports removal of a tobacco product of the brand designated in the designating operation received by the order terminal, the tobacco product management method including the steps of:
   on the basis of information obtained from a customer, acquiring a registered brand identifier for identifying a registered brand of the customer stored in a customer brand storage unit;
   causing a display unit of the order terminal to display a brand designation display that makes it possible to perform a designating operation for a tobacco product of the registered brand identified using the acquired registered brand identifier;
   identifying a brand identifier of a tobacco product of a brand differing from the registered brand and designated in the designating operation performed to the order terminal by the customer; and
   performing update processing for replacing, with the identified brand identifier, the registered brand identifier of the customer stored in the customer brand storage unit.
(9) The tobacco product management method according to (8), further including the steps of:
   determining whether or not the identified brand identifier and the registered brand identifier match each other; and
   in a case where not matching each other is determined in the determining step, causing the display unit of the order terminal to display a selection display that makes it possible to perform a selection operation as to whether or not to update the registered brand to the brand of the tobacco product designated in the designating operation.
(10) The tobacco product management method according to (9), further including the step of:
   in a case where a plurality of registered brand identifiers are stored for the customer in the customer brand storage unit, causing the display unit of the order terminal to display a selection display that makes it possible to perform a selection operation for a registered brand that should be updated, from among a plurality of registered brands identified using the plurality of registered brand identifiers.
(11) The tobacco product management method according to (9) or (10), in which
   after a brand identifier of a tobacco product designated in the designating operation by the customer to the order terminal is transmitted from the order terminal to the supporting device, the selection display is displayed by the display unit of the order terminal.
(12) The tobacco product management method according to any one of (8) to (11), further including the step of:
   in a case where a plurality of registered brand identifiers are stored for the customer in the customer brand storage unit, automatically selecting a registered brand identifier that should be updated, from among the plurality of registered brand identifiers, in which
   the update processing is a process for replacing the automatically selected registered brand identifier with the identified brand identifier.
(13) The tobacco product management method according to any one of (8) to (12) further including the step of:
   in a case where a plurality of registered brand identifiers are acquired, causing the display unit of the order terminal to display a collective brand designation display that makes it possible to collectively order tobacco products of a plurality of brands identified using the plurality of registered brand identifiers.
(14) The tobacco product management method according to any one of (8) to (13), in which
   the customer brand storage unit is provided in the supporting device or another server device differing from the supporting device, and also in a mobile device of the customer, and
   in the step of performing the update processing, in a case where the registered brand identifier stored in the customer brand storage unit is replaced with the identified brand identifier, the update processing is performed to both of the customer brand storage unit provided in the supporting device or said another server device and the customer brand storage unit provided in the mobile device of the customer.

The present application claims priority based on Japanese Patent Application No. 2018-247958 filed in Japan on December 28, 2018, the disclosures of which are incorporated herein by reference in their entirety.

## Claims

1. A tobacco product management system including an order terminal capable of displaying brand information on tobacco products of a plurality of brands and capable of receiving a designating operation for a brand that a customer wishes to order from among the plurality of brands and a supporting device that supports removal of a tobacco product of the brand designated in the designating operation received by the order terminal, the tobacco product management system comprising:
a brand acquisition means configured to, on a basis of information obtained from a customer, acquire a registered brand identifier for identifying a registered brand of the customer stored in a customer brand storage unit;
a display processing means configured to cause a display unit of the order terminal to display a brand designation display that makes it possible to perform a designating operation for a tobacco product of the registered brand identified using the acquired registered brand identifier;
a brand identification means configured to identify a brand identifier of a tobacco product of a brand differing from the registered brand and designated in the designating operation performed to the order terminal by the customer; and
an update processing means configured to perform update processing for replacing, with the identified brand identifier, the registered brand identifier of the customer stored in the customer brand storage unit.

2. The tobacco product management system according to claim 1, further comprising:
a determination means configured to determine whether or not the identified brand identifier and the registered brand identifier match each other, wherein
in a case where the determination means determines not matching each other, the display processing means causes the display unit of the order terminal to display a selection display that makes it possible to perform a selection operation as to whether or not to update the registered brand to the brand of the tobacco product designated in the designating operation.

3. The tobacco product management system according to claim 2, wherein
in a case where a plurality of registered brand identifiers are stored for the customer in the customer brand storage unit, the display processing means causes the display unit of the order terminal to further display a selection display that makes it possible to perform a selection operation for a registered brand that should be updated, from among a plurality of registered brands identified using the plurality of registered brand identifiers.

4. The tobacco product management system according to claim 2 or 3, wherein
after a brand identifier of a tobacco product designated in the designating operation by the customer on the order terminal is transmitted from the order terminal to the supporting device, the display processing means causes the display unit of the order terminal to display the selection display.

5. The tobacco product management system according to any one of claims 1 to 4, wherein
in a case where a plurality of registered brand identifiers are stored for the customer in the customer brand storage unit, the update processing means automatically selects a registered brand identifier that should be updated, from among the plurality of registered brand identifiers, and performs the update processing for replacing the selected registered brand identifier with the identified brand identifier.

6. The tobacco product management system according to any one of claims 1 to 5, wherein
the brand acquisition means acquires a plurality of registered brand identifiers for the customer, and
in a case where the brand acquisition means acquires the plurality of registered brand identifiers, the display processing means causes the display unit of the order terminal to display a collective brand designation display that makes it possible to collectively order tobacco products of a plurality of brands identified using the plurality of registered brand identifiers.

7. The tobacco product management system according to any one of claims 1 to 6, wherein
the customer brand storage unit is provided in the supporting device or another server device differing from the supporting device, and also in a mobile device of the customer, and
in a case where the registered brand identifier stored in the customer brand storage unit is replaced with the identified brand identifier, the update processing means performs the update processing to both of the customer brand storage unit provided in the supporting device or said another server device and the customer brand storage unit provided in the mobile device of the customer.

8. A tobacco product management method to be executed by a system including an order terminal capable of displaying brand information on tobacco products of a plurality of brands and capable of receiving a designating operation for a brand that a customer wishes to order from among the plurality of brands and a supporting device that supports removal of a tobacco product of the brand designated in the designating operation received by the order terminal, the tobacco product management method comprising the steps of:
on a basis of information obtained from a customer, acquiring a registered brand identifier for identifying a registered brand of the customer stored in a customer brand storage unit;
causing a display unit of the order terminal to display a brand designation display that makes it possible to perform a designating operation for a tobacco product of the registered brand identified using the acquired registered brand identifier;
identifying a brand identifier of a tobacco product of a brand differing from the registered brand and designated in the designating operation performed to the order terminal by the customer; and
performing update processing for replacing, with the identified brand identifier, the registered brand identifier of the customer stored in the customer brand storage unit.

9. The tobacco product management method according to claim 8, further comprising the steps of:
determining whether or not the identified brand identifier and the registered brand identifier match each other; and
in a case where not matching each other is determined in the determining step, causing the display unit of the order terminal to display a selection display that makes it possible to perform a selection operation as to whether or not to update the registered brand to the brand of the tobacco product designated in the designating operation.

10. The tobacco product management method according to claim 9 further comprising the step of:
in a case where a plurality of registered brand identifiers are stored for the customer in the customer brand storage unit, causing the display unit of the order terminal to display a selection display that makes it possible to perform a selection operation for a registered brand that should be updated, from among a plurality of registered brands identified using the plurality of registered brand identifiers.

11. The tobacco product management method according to claim 9 or 10, wherein
after a brand identifier of a tobacco product designated in the designating operation by the customer to the order terminal is transmitted from the order terminal to the supporting device, the selection display is displayed by the display unit of the order terminal.

12. The tobacco product management method according to any one of claims 8 to 11, further comprising the step of:
in a case where a plurality of registered brand identifiers are stored for the customer in the customer brand storage unit, automatically selecting a registered brand identifier that should be updated, from among the plurality of registered brand identifiers, wherein
the update processing is a process for replacing the automatically selected registered brand identifier with the identified brand identifier.

13. The tobacco product management method according to any one of claims 8 to 12 further comprising the step of:
in a case where a plurality of registered brand identifiers are acquired, causing the display unit of the order terminal to display a collective brand designation display that makes it possible to collectively order tobacco products of a plurality of brands identified using the plurality of registered brand identifiers.

14. The tobacco product management method according to any one of claims 8 to 13, wherein
the customer brand storage unit is provided in the supporting device or another server device differing from the supporting device, and also in a mobile device of the customer, and
in the step of performing the update processing, in a case where the registered brand identifier stored in the customer brand storage unit is replaced with the identified brand identifier, the update processing is performed to both of the customer brand storage unit provided in the supporting device or said another server device and the customer brand storage unit provided in the mobile device of the customer.
